# EUROPEAN PATENT SPECIFICATION

(11) **EP 4 362 480 B1**
(45) Date of publication and mention of the grant of the patent: **18.02.2026**
(21) Application number: 22849941.4
(22) Date of filing: 29.07.2022
(51) Int. Cl.: H04N 23/45, H04N 23/58, H04N 23/667, H04N 23/69, G01S 17/89, G01S 17/86, G01S 17/87

(54) **ELECTRONIC DEVICE COMPRISING CAMERA AND METHOD FOR OPERATING ELECTRONIC DEVICE**
ELEKTRONISCHE VORRICHTUNG MIT KAMERA UND VERFAHREN ZUM BETRIEB EINER ELEKTRONISCHEN VORRICHTUNG
DISPOSITIF ÉLECTRONIQUE COMPRENANT UNE CAMÉRA ET PROCÉDÉ DE FONCTIONNEMENT DU DISPOSITIF ÉLECTRONIQUE

(30) Priority: 29.07.2021 KR 20210099784
(43) Date of publication of application: 01.05.2024
(73) Proprietor: Samsung Electronics Co., Ltd., Suwon-si, Gyeonggi-do 16677 (KR)
(72) Inventor: CHOI, Gwangho, Suwon-si, Gyeonggi-do 16677 (KR); KIM, Jongah, Suwon-si, Gyeonggi-do 16677 (KR); YOON, Heewoong, Suwon-si, Gyeonggi-do 16677 (KR); LEE, Kihyuk, Suwon-si, Gyeonggi-do 16677 (KR); LEE, Donghan, Suwon-si, Gyeonggi-do 16677 (KR); CHO, Jeongho, Suwon-si, Gyeonggi-do 16677 (KR)
(74) Representative: HGF
(86) International application number: PCT/KR2022/011246
(87) International publication number: WO 2023/008968

(56) References cited:
- WO-A1-2021/045511
- WO-A1-2021/096219
- JP-A- 2020 174 361
- KR-A- 20140 140 855
- KR-A- 20200 100 498
- US-A1- 2019 109 977
- US-A1- 2021 084 223
- US-A1- 2021 120 183
- US-A1- 2022 268 935

## Description

### [Technical Field]

Various embodiments disclosed in this document relate to an electronic device including a camera and a method of operating the electronic device and, more specifically, to an electronic device that selects a camera to perform photographing, based on a distance to a subject, and determines a region of interest of a distance sensor, and a method of operating the electronic device.

### [Background Art]

As cameras play an important role in electronic devices such as smartphones and as camera technology develops, electronic devices such as recently released smartphones may include various types of cameras such as ultra-wide angle cameras, wide angle cameras, and telecameras. The ultra-wide angle camera is a camera that includes a lens having a wide field of view, and may take photos at a field of view similar to the human field of view because the field of view is approximately 120 degrees or more. The wide angle camera is a camera that includes a lens having a field of view of about 70 degrees to 80 degrees and is used for general smartphone photography. The telecamera is a camera that includes a telephoto lens for photographing distant subjects and is able to obtain high-quality photos at magnifications ranging from about 2x zoom to about 10x zoom or higher.

The electronic device may include various cameras and include a distance sensor (range sensor) for measuring the distance to a subject to be photographed in order to select a camera suitable for the subject and the photographing environment and focus on the subject. For example, the distance sensor may measure the distance to a subject using time-of-flight (TOF) technology, which uses the flight time of photons. The distance sensor may include a plurality of light emitters and a plurality of light receivers to measure a plurality of pieces of distance data, and the electronic device may extract distance data to be used for photographing from the plurality of pieces of distance data obtained from the distance sensor and focus the camera on the subject using the extracted distance data.
US2019109977A1 relates to a time of flight (ToF) sensor that includes an illumination source module, a transmitter lens module, a receiver lens module, and an integrated circuit that includes a ToF imaging array. The ToF imaging array includes a plurality of single photon avalanche diodes (SPADs) and a plurality of ToF channels coupled to the plurality of SPADs. In a first mode, the ToF imaging array is configured to select a first group of SPADs corresponding to a first FoV. In a second mode, the ToF imaging array is configured to select a second group of SPADs corresponding to a second FoV different than the first FoV.
US2021084223A1 relates to a method performed by user equipment (UE) for selecting a camera among multi-camera that includes receiving a user instruction indicative of capturing of a scene and detecting Time of Flight (TOF) sensor information relating to scene. The TOF sensor information pertains to details relating to depth of each pixel in an image and an IR image of the scene. The method includes determining depth information of the scene based on the TOF sensor information and is indicative of a ROI in the scene, information about at least one object in the scene, and a type of the scene. The method includes determining scene information based on the depth information including identification information of the at least one object in the scene and distance information to the UE from each object from among the at least one object. The method includes selecting a camera, from among a plurality of cameras based on the scene information.
WO2021096219A1 relates to an electronic device for providing a service using depth information, and to an operating method thereof. The electronic device comprises: a first sensor which acquires an image including an object; a second sensor which generates depth data on the object; at least one processor operatively connected to the first sensor and the second sensor; and at least one memory operatively connected to the processor, wherein the memory may store instructions configured to: cause the processor to calculate a first distance between the object and the electronic device on the basis of the depth data generated by means of the second sensor while the image is acquired by means of the first sensor; stop the operation of the second sensor if the calculated first distance is greater than a preset distance; calculate a second distance between the object and the electronic device by means of the first sensor while the operation of the second sensor is stopped; and restart the operation of the second sensor if the calculated second distance is within the preset distance.

### [Disclosure of Invention]

### [Technical Problem]

An electronic device according to an embodiment of the disclosure may include various types of cameras and a distance sensor (range sensor) and provide best quality photos according to the photographing environment when taking photos. According to an embodiment, the camera and the distance sensor may be disposed in different positions due to limitations in the mechanical structures thereof. In addition, the distance sensor and various cameras may have their own field of view (FOV). In this way, if the distance between the subject to be photographed and the distance sensor varies due to differences in the position or field of view of the distance sensor and the camera, or if a camera used for photographing varies, a region of interest (ROI) to be used among the data of the distance sensor may change in its size and position.

In addition, in the case of a mode for selecting a camera to be used for photographing, based on the distance to the subject, even if the camera is changed, distance data is obtained from the same number of zones within the field of view of the distance sensor. For example, if the subject is located close to the distance sensor, the standard deviation of the distance measured by the distance sensor may be small. In this case, there may be no difference in accuracy even if the number of zones from which the distance sensor obtains distance data is reduced. Therefore, maintaining the number of zones in this case may cause current consumption and heat generation of the electronic device.

The technical problems to be solved in this document are not limited to the technical problems mentioned above, and other technical problems not mentioned may be clearly understood by those skilled in the art to which the disclosure pertains from the description below.

### [Solution to Problem]

Aspects and embodiments of the invention are set out in the appended claims.

### [Advantageous Effects of invention]

For example, an electronic device may photograph a subject with best image quality using a distance value of a region of interest of a distance sensor.

For example, the electronic device may select a camera suitable for the photographing environment, based on the distance to the subject.

For example, the electronic device may obtain a region of interest corresponding to the area where the subject is located based on the distance to the subject and the selected camera.

For example, the electronic device may use the distance data of the region of interest based on the distance to the subject and the selected camera for the autofocus function of the camera.

For example, the electronic device may control the operation mode of the distance sensor, based on the distance to the subject, thereby reducing power consumption.

For example, if the distance to the subject is short, the electronic device may switch the distance sensor to a mode operated at low power, thereby reducing power consumption.

For example, if the distance to the subject is short, the electronic device may reduce the number of zones divided for measuring the distance within the field of view of the distance sensor, thereby reducing the power consumed by the distance sensor.

For example, if the distance to the subject is short, the electronic device may reduce the light emission period of the distance sensor, thereby reducing the power consumed by the distance sensor.

### [Brief Description of Drawings]

In connection with the description of the drawings, identical or similar reference numerals may be used for identical or similar elements.
FIG. 1 is a block diagram illustrating an electronic device 101 in a network environment 100 according to various embodiments;
FIG. 2 is a block diagram of an electronic device according to various embodiments;
FIG. 3 is a flowchart illustrating a method of controlling an electronic device such that a processor determines a region of interest of a distance sensor according to various embodiments;
FIG. 4A is a diagram illustrating an operation in which a processor determines a region of interest of a distance sensor according to various embodiments;
FIG. 4B, FIG. 4C, FIG. 4D and FIG. 4E are diagrams illustrating an operation in which the processor determines a region of interest of the distance sensor according to various embodiments;
FIG. 5 is a flowchart illustrating a method of controlling an electronic device such that a processor determines a mode related to a distance sensor;
FIG. 6A is a diagram illustrating a method of controlling an electronic device such a processor determines a zone mode of a distance sensor according to various embodiments;
FIG. 6B is a diagram illustrating a method of controlling the electronic device such that the processor determines the zone mode of the distance sensor according to various embodiments;
FIG. 6C is a diagram illustrating a method of controlling an electronic device such that a processor determines a distance sensor and a mode according to various embodiments;
FIGS. 7A and 7B are flowcharts illustrating a method of controlling an electronic device such that a processor according to various embodiments determines a camera to be used for photographing, a region of interest of a distance sensor and/or a mode related to the distance sensor;
FIG. 8 is a diagram illustrating a method of controlling an electronic device such that a processor operates an auxiliary zone mode of a distance sensor according to various embodiments.

### [Mode for the Invention]

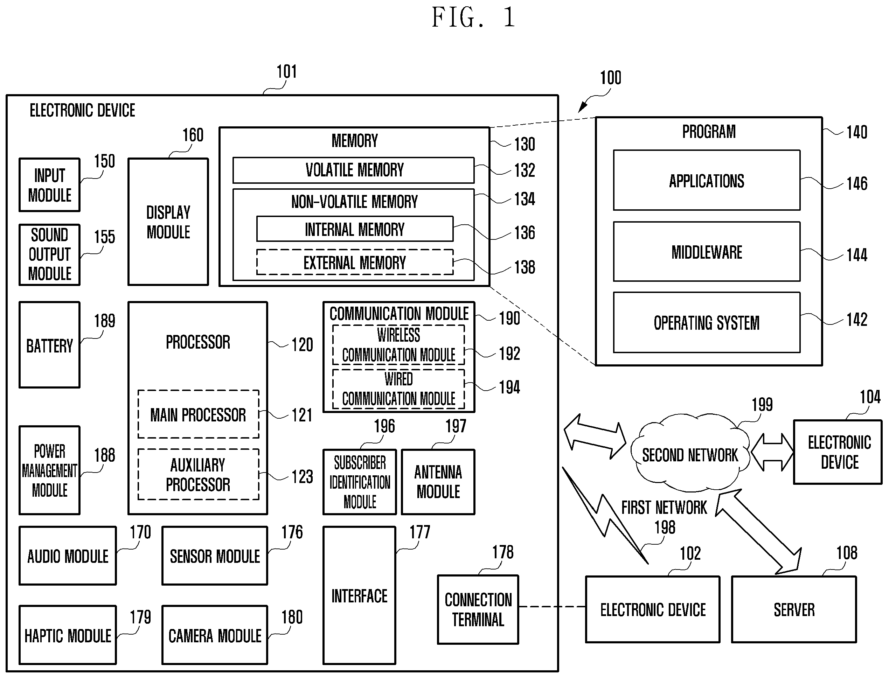

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 includes a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semisupervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

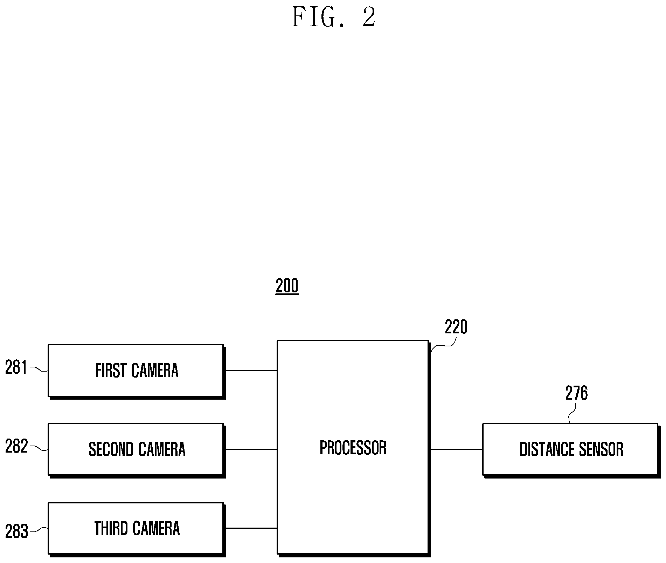

FIG. 2 is a block diagram of an electronic device according to various embodiments.

Referring to FIG. 2, an electronic device 200 (e.g., the electronic device 101 in FIG. 1) includes a processor 220 (e.g., the processor 120 in FIG. 1), a first camera 281 (e.g., the camera 180 in FIG. 1), a second camera 282 (e.g., the camera 180 in FIG. 1), a third camera 283 (e.g., the camera 180 in FIG. 1), and a distance sensor 276 (e.g., the sensor module 176 in FIG. 1). The elements included in FIG. 2 are some of the elements included in the electronic device 200, and the electronic device 200 may further include various other elements shown in FIG. 1.

The first camera 281 according to various embodiments may be any one of an ultra-wide angle camera, a wide angle camera, a first telecamera, and a second telecamera.

The ultra-wide camera may be a camera that includes an ultra-wide angle lens and is used to photograph a nearby subject. The ultra-wide camera may be a camera having the widest field of view among the cameras included in the electronic device 200.

The wide angle camera may be a camera that includes a wide angle lens and is used to photograph a nearby subject. The wide angle camera may be a camera having the second widest field of view among the cameras included in the electronic device 200.

The first telecamera may be a camera that includes a telephoto lens capable of photographing at N1 magnification and is used to photograph a distant subject. The first telecamera may be a camera having the second narrowest field of view among the cameras included in the electronic device 200.

The second telecamera (tele camera) may be a camera that includes a telephoto lens capable of photographing at N2 magnification and is used to photograph a distant subject. The second telecamera may be a camera having the narrowest field of view among the cameras included in the electronic device 200.

The second camera 282 according to various embodiments may be any one of an ultra-wide angle camera, a wide angle camera, a first telecamera, and a second telecamera. The second camera 282 may be a camera disposed at a location different from those of the first camera 281 and the third camera 283 in the electronic device 200 and has a different field of view therefrom.

The third camera 283 according to various embodiments may be any one of an ultra-wide angle camera, a wide angle camera, a first telecamera, and a second telecamera. The third camera 283 may be a camera disposed at a location different from those of the first camera 281 and the second camera 282 in the electronic device 200 and may have a different field of view therefrom.

According to various embodiments, the processor 220 determines a camera to be used for photographing, based on the distance to the subject to be photographed.

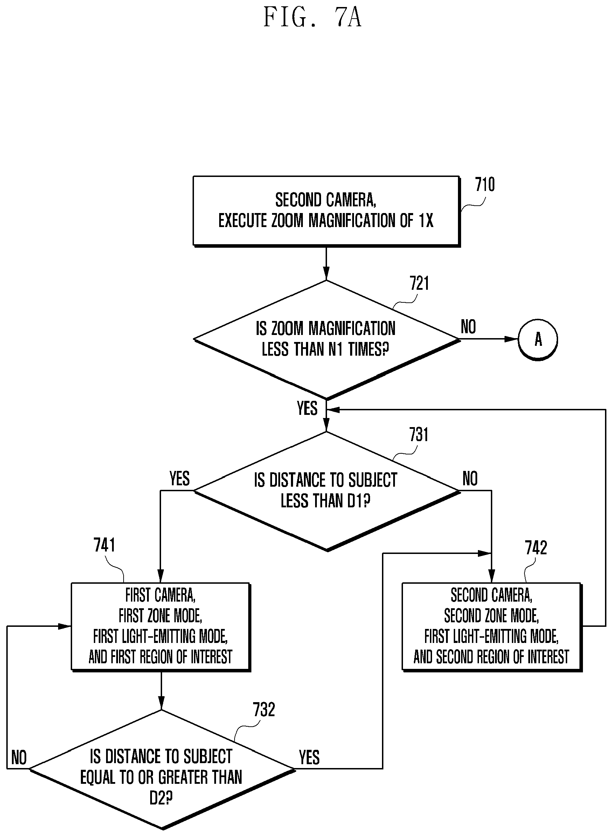

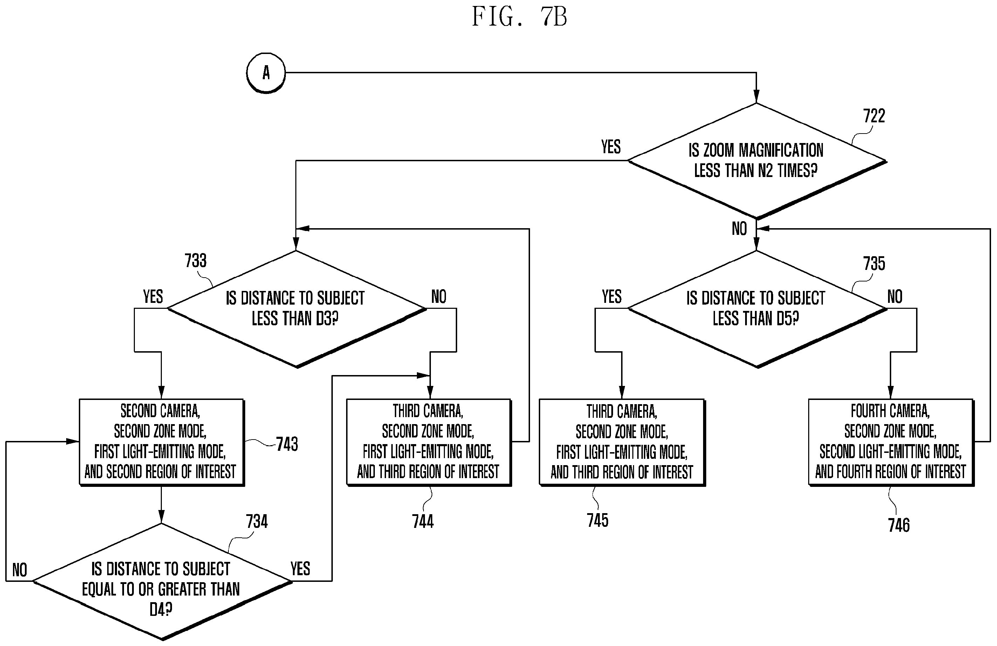

For example, the processor 220 determines the first camera 281 as the camera to be used for photographing in response to the case where the distance to the subject is less than d1 (e.g., 28 cm) (e.g., "Yes" in the operation 731 in FIG. 7A). For example, the processor 220 may determine the second camera 282 as the camera to be used for photographing in response to the case where the distance to the external subject is d1 (e.g., 28 cm) or more (e.g., "No" in the operation 731 in FIG. 7A). For example, the processor 220 may determine the second camera 282 as the camera to be used for photographing in response to the case where the distance to the external subject is less than d3 (e.g., 40 cm) (e.g., "Yes" in the operation 733 in FIG. 7B). For example, the processor 220 may determine the third camera 283 as the camera to be used for photographing in response to the case where the distance to the external subject is d3 (e.g., 40 cm) or more (e.g., "No" in the operation 733 in FIG. 7B). For example, the processor 220 may determine the third camera 283 as the camera to be used for photographing in response to the case where the distance to the external subject is less than d5 (e.g., 80 cm) (e.g., "Yes" in the operation 735 in FIG. 7B). For example, the processor 220 may determine the fourth camera (not shown) as the camera to be used for photographing in response to the case where the distance to the external subject is d5 or more.

The distance sensor 276 according to various embodiments may measure the distance to the subject in a time-of-flight (TOF) method.

According to an embodiment, the distance sensor 276 includes a light emitter that outputs light particles at an angle within the field of view (FOV) and a light receiver (sensor) that obtains light particles that are output from the light emitter and then reflected by the subject. For example, the distance sensor 276 may measure the distance, based on the time of flight taken for the light or radio waves output from the distance sensor to be reflected by the subject and return thereto. For example, the distance sensor 276 may determine the distance to the subject to be a value obtained by multiplying the time of flight by the speed of light and dividing this in half. For example, the distance sensor 276 may measure the distance, based on the amount of light incident on the light receiver. The distance sensor 276 may determine that the smaller the amount of light received by the light receiver, the longer the distance and that the larger the amount of light received by the distance sensor, the shorter the distance. For example, the distance sensor 276 may measure the distance, based on a change in the phase of light obtained by the light receiver.

The distance sensor 276 according to various embodiments includes a plurality of cells including a plurality of light emitters and a plurality of light receivers, and the processor 220 may obtain a plurality of pieces of distance data from the plurality of cells.

According to an embodiment, the processor 220 may distinguish between a plurality of zones within the field of view (FOV) of the distance sensor 276, based on a plurality of pieces of distance data measured by the distance sensor 276. For example, the processor 220, in response to the case where the distance sensor 276 includes a plurality of cells arranged in n rows and m columns and measures n x m pieces of distance data, may distinguish between zones of n rows and m columns within the field of view (FOV) of the distance sensor 276.

According to an embodiment, the processor 220 may determine modes for distinguishing a plurality of zones within the field of view of the distance sensor 276. The modes for distinguishing a plurality of zones are modes in which the size of the area for measuring one piece of distance data differs therebetween, and may include a first zone mode and/or a second zone mode. For example, the modes for distinguishing a plurality of zones are modes in which the number of cells for measuring one piece of distance data differs therebetween, and may include a first zone mode in which a plurality of cells measures one piece of distance data and/or a second zone mode in which a single cell measures one piece of distance data.

For example, in the first zone mode, the processor 220, in response to the case that the distance sensor 276 includes a plurality of cells arranged in n rows and m columns, may control the distance sensor 276 such that an area including a plurality of cells measures one piece of distance data. For example, the processor 220 may control the distance sensor 276 such that cells in 2 rows and 2 columns measure one piece of data. The processor 220, in response to the case where cells in 2 rows and 2 columns of the distance sensor 276 measure one piece of distance data, may distinguish zones in which the area for measuring one piece of distance data is arranged in n/2 rows and m/2 columns within the field of view of the distance sensor 276. For example, the processor 220, in response to the case where the distance sensor 276 includes a plurality of cells in 8 rows and 8 columns and where the zone mode is determined to be the first zone mode, may distinguish 16 zones in 4 rows and 4 columns within the field of view of the distance sensor 276.

For example, in the second zone mode, the processor 220, in response to the case where the distance sensor 276 includes a plurality of cells arranged in n rows and m columns, may control the distance sensor 276 such that a single cell measures one piece of distance data. For example, the processor 220, in response to the case where a single area of the distance sensor 276 measures one piece of distance data, may distinguish zones in which the area for measuring one piece of distance data is arranged in n rows and m columns within the field of view of the distance sensor 276. For example, the processor 220, in response to the case where the distance sensor 276 includes a plurality of cells in 8 rows and 8 columns and where the zone mode is determined to be the second mode, may distinguish 64 zones in 8 rows and 8 columns within the field of view of the distance sensor 276.

According to various embodiments, the processor 220 may determine a region of interest (ROI) including at least one zone from among a plurality of zones within the field of view of the distance sensor 276. For example, the region of interest may be an area where the processor 220 extracts and processes data on the region of interest from among the plurality of pieces of distance data obtained from the distance sensor 276 for the operation of auto focus (AF) of the camera determined to be used for photographing.

According to an embodiment, the processor 220 may determine the region of interest, based on the distance to the subject obtained from the distance sensor 276 and the camera determined for photographing.

According to an embodiment, the processor 220 may store, as the region of interest, a portion of the area in which the field of view of the distance sensor 276 overlaps at least one of the fields of view of the first camera 281, the second camera 282, and the third camera 283. For example, the processor 220 may store, as the region of interest, the area close to the center of the fields of view of the first camera 281, the second camera 282, and the third camera 283 among the area in which the field of view of the distance sensor 276 overlaps at least one of the fields of view of the first camera 281, the second camera 282, and the third camera 283.

For example, the processor 220, in response to the case where the distance to the subject obtained from the distance sensor 276 is d1 and where the camera determined to be used for photographing is the first camera, may determine, as the region of interest, a portion of the area in which the field of view of the distance sensor 276 at the distance of d1 overlaps the first camera 281.

According to various embodiments, the processor 220 may determine a light-emitting mode of the distance sensor 276.

According to an embodiment, the processor 220 controls the distance sensor 276 such that the distance sensor 276 operates in a first light-emitting mode or a second light-emitting mode, based on the distance to the subject and the standard deviation of the distance data.

For example, in response to the case where the distance to the subject is less than a specified value and where the standard deviation of the distance data is less than a specified value, the processor 220 may control the distance sensor 276 such that the distance sensor 276 operates in the first light-emitting mode. For example, the first light-emitting mode may be a mode in which the light emitter of the distance sensor 276 discontinuously outputs light particles. For example, if the subject is close to the electronic device 200, the distance data measured by the distance sensor 276 is constant, so the processor 220 may reduce the light-emitting time of the light emitter of the distance sensor 276, thereby lowering power consumption.

According to an embodiment, in response to the case where the distance to the subject is a specified value or more or where the standard deviation of the distance data is a specified value or more, the processor 220 may control the distance sensor 276 such that the distance sensor 276 operates in the second light-emitting mode. For example, the second light-emitting mode may be a mode in which the light emitter of the distance sensor 276 continuously outputs light particles. For example, if the subject is located far from the electronic device 200 or there is a plurality of subjects within the field of view of the distance sensor 276, the distance data measured by the distance sensor 276 is not constant, so the processor 220 may obtain accurate distance data by increasing the light-emitting time of the light emitter of the distance sensor 276.

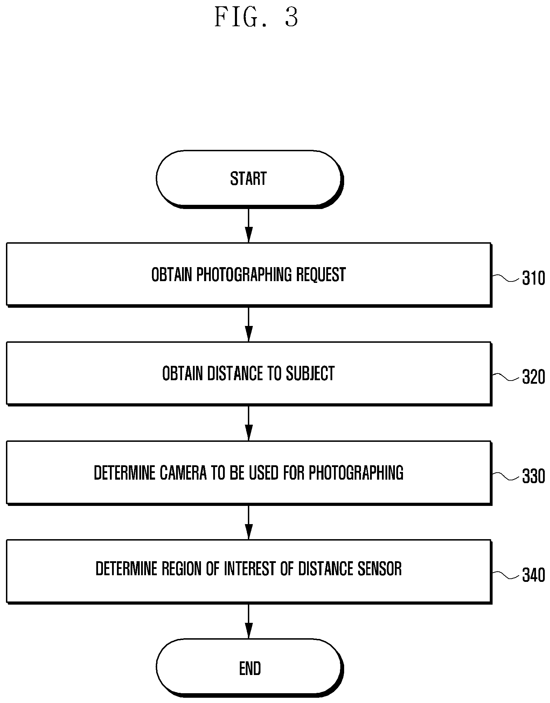

FIG. 3 is a flowchart illustrating a method of controlling an electronic device 200 (e.g., the electronic device 200 in FIG. 2) such that a processor 220 (e.g., the processor 220 in FIG. 2) determines a region of interest of a distance sensor 276 (e.g., the distance sensor 276 in FIG. 2) according to various embodiments.

According to various embodiments, the processor 220 may obtain a photographing request in operation 310.

According to an embodiment, the processor 220 may obtain a photographing request from the user after executing an application that uses a camera. For example, the processor 220 may execute a camera photographing application in response to a user's request and provide a preview screen for camera photographing.

According to various embodiments, the processor 220 may obtain a distance to an external subject in operation 320.

For example, the processor 220 may obtain a distance to an external subject included in the preview screen for camera photographing.

According to an embodiment, the processor 220 may obtain a distance to an external subject through the distance sensor 276. For example, the distance sensor 276 may measure the distance to the subject using a time-of-flight (TOF) method.

According to an embodiment, the distance sensor 276 may include a light emitter that outputs light particles at an angle within the field of view (FOV) and a light receiver (sensor) that obtains light particles that are output from the light emitter and then reflected by the subject. For example, the distance sensor 276 may measure the distance, based on the time of flight taken for the light or radio waves output from the distance sensor to be reflected by the subject and return thereto. For example, the distance sensor 276 may determine the distance to the subject to be a value obtained by multiplying the time of flight by the speed of light and dividing this in half. For example, the distance sensor 276 may measure the distance, based on the amount of light incident on the light receiver. The distance sensor 276 may determine that the smaller the amount of light received by the light receiver, the longer the distance and that the larger the amount of light received by the distance sensor, the shorter the distance. For example, the distance sensor 276 may measure the distance, based on a change in the phase of light obtained by the light receiver.

According to various embodiments, the processor 220 may determine a camera to be used for photographing in operation 330.

According to an embodiment, the processor 220 may determine a camera to be used for photographing, based on the distance to the external subject obtained from the distance sensor 276.

For example, the processor 220 may determine the first camera 281 as the camera to be used for photographing in response to the case where the distance to the subject is less than d1 (e.g., 28 cm) (e.g., "Yes" in the operation 731 in FIG. 7A). For example, the processor 220 may determine the second camera 282 as the camera to be used for photographing in response to the case where the distance to the external subject is d1 (e.g., 28 cm) or more (e.g., "No" in the operation 731 in FIG. 7A). For example, the processor 220 may determine the second camera 282 as the camera to be used for photographing in response to the case where the distance to the external subject is less than d3 (e.g., 40 cm) (e.g., "Yes" in the operation 733 in FIG. 7B). For example, the processor 220 may determine the third camera 283 as the camera to be used for photographing in response to the case where the distance to the external subject is d3 (e.g., 40 cm) or more (e.g., "No" in the operation 733 in FIG. 7B). For example, the processor 220 may determine the third camera 283 as the camera to be used for photographing in response to the case where the distance to the external subject is less than d5 (e.g., 80 cm) (e.g., "Yes" in the operation 735 in FIG. 7B). For example, the processor 220 may determine the fourth camera (not shown) as the camera to be used for photographing in response to the case where the distance to the external subject is d5 or more.

According to various embodiments, the processor 220 may determine a region of interest of the distance sensor in operation 340.

According to an embodiment, the processor 220 may determine a region of interest (ROI) including at least one zone from among a plurality of zones within the field of view of the distance sensor 276.

According to an embodiment, the processor 220 may determine a region of interest, based on the distance to the subject obtained from the distance sensor 276 and the camera determined for photographing.

According to an embodiment, the processor 220 may store, as the region of interest, a portion of the area in which the field of view of the distance sensor 276 overlaps at least one of the fields of view of the first camera 281, the second camera 282, and the third camera 283. For example, the processor 220 may store, as the region of interest, the area close to the center of the fields of view of the first camera 281, the second camera 282, and the third camera 283 among the area in which the field of view of the distance sensor 276 overlaps at least one of the fields of view of the first camera 281, the second camera 282, and the third camera 283.

For example, in response to the case where the distance to the subject obtained from the distance sensor 276 is d1 and where the camera determined to be used for photographing is the first camera, the processor 220 may determine, as the region of interest, a portion of the area in which the field of view of the distance sensor 276 at the distance of d1 overlaps the first camera 281.

According to various embodiments, the processor 220 may extract data on the region of interest from among the plurality of pieces of distance data obtained from the distance sensor 276, based on the determined region of interest, and use the same to process the operation of auto focus (AF) of the camera determined to be used for photographing.

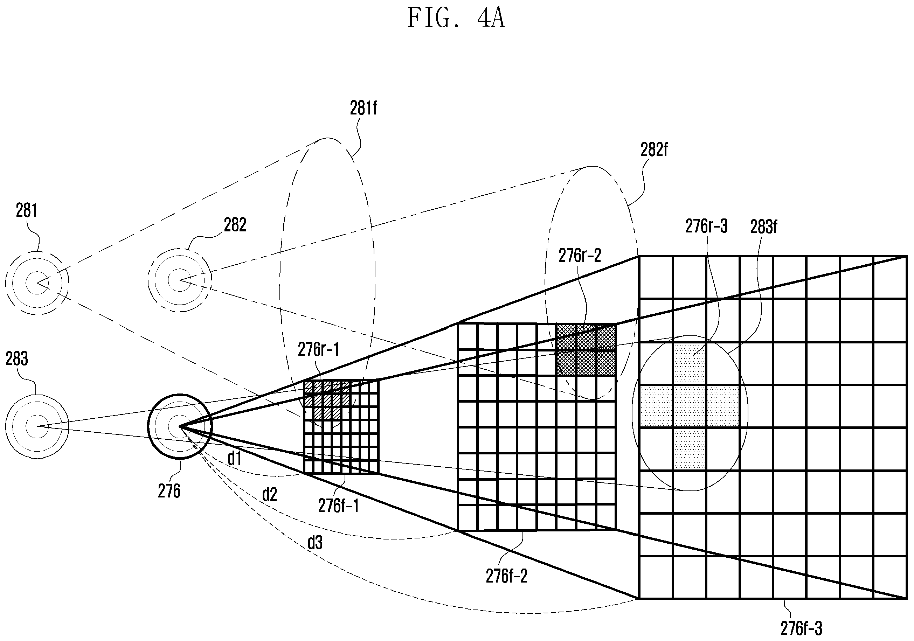

FIG. 4A is a diagram illustrating an operation in which a processor 220 (e.g., the processor 220 in FIG. 2) determines a region of interest of a distance sensor 276 (e.g., the distance sensor 276 in FIG. 2) according to various embodiments.

According to various embodiments, the processor 220 may determine a region of interest of the distance sensor 276 in response to the distance between the distance sensor 276 and the subject and the camera determined to be used for photographing.

According to various embodiments, a first camera 281 (e.g., the first camera 281 in FIG. 2), a second camera 282 (e.g., the second camera 282 in FIG. 2), and/or a third camera 283 (e.g., the third camera 283 in FIG. 2) may be disposed at structurally different positions in an electronic device 200 (e.g., the electronic device 200 in FIG. 2) and have different fields of view (FOV). For example, the first camera 281 may be a camera having a first field of view 281f. For example, the second camera 282 may be a camera having a second field of view 282f. For example, the third camera 283 may be a camera having a third field of view 283f.

According to various embodiments, the processor 220 may store, as the region of interest of the distance sensor 276, a portion of the area in which the fields of view 276f-1, 276f-2, and 276f-3 of the distance sensor 276 overlap at least one of the first field of view 281f, the second field of view 282f, and the third field of view 283f.

According to an embodiment, the processor 220 may store, as the region of interest of the distance sensor 276, the area close to the center of the first field of view 281f, the second field of view 282f, and/or the third field of view 283f among the area in which the fields of view 276f-1, 276f-2, and 276f-3 of the sensor overlap the first field of view 281f, the second field of view 282f, and/or the third field of view 283f.

According to an embodiment, for the distance d1 from the distance sensor 276, the processor 220 may determine the first camera 281 as the camera to be used for photographing and determine, as the region of interest of the distance sensor 276, at least a portion of the first area 276r-1, which is the area where the sensor field of view 276f-1 and the first field of view 281f overlap.

According to an embodiment, for the distance d2 from the distance sensor 276, the processor 220 may determine the second camera 282 as the camera to be used for photographing and determine, as the region of interest of the distance sensor 276, at least a portion of the second area 276r-2, which is the area where the sensor field of view 276f-2 and the second field of view 282f overlap.

According to an embodiment, for the distance d3 from the distance sensor 276, the processor 220 may determine the third camera 283 as the camera to be used for photographing and determine, as the region of interest of the distance sensor 276, at least a portion of the third area 276r-3, which is the area where the sensor field of view 276f-3 and the third field of view 283f overlap.

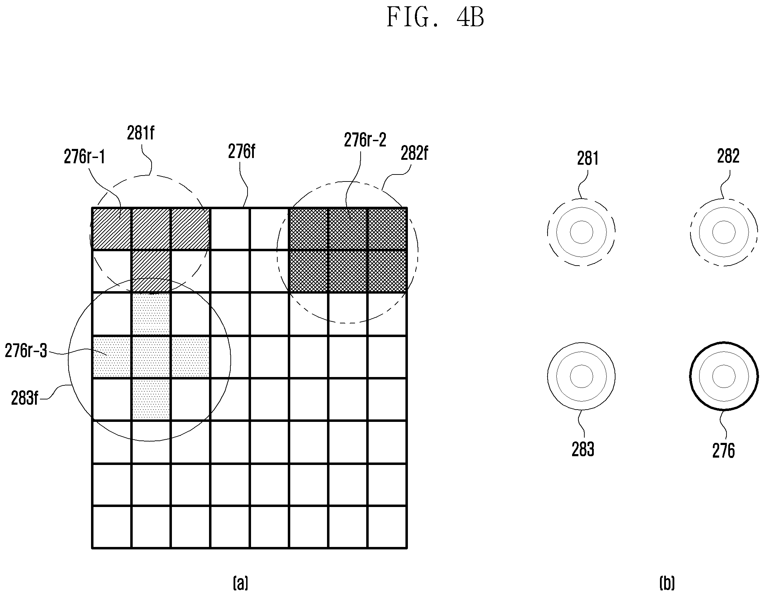

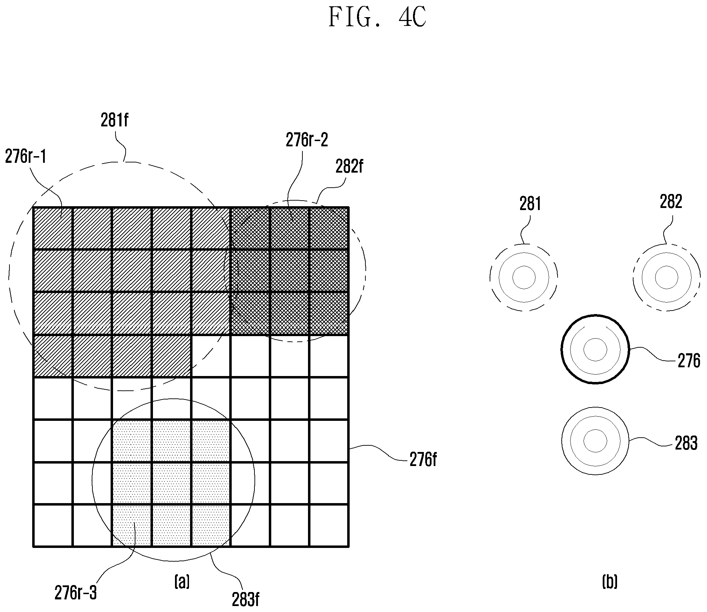

FIGS. 4B and 4C are diagrams illustrating an operation in which the processor 220 determines a region of interest of the distance sensor 276 according to various embodiments.

Diagrams (a) in FIGS. 4B and 4C illustrate the area in which the field of view 276f of the distance sensor 276 overlaps at least a portion of a first field of view 281f, a second field of view 282f, and a third field of view 283f at a specified distance in response to the case where the first camera 281 having the first field of view 281f, the second camera 282 having the second field of view 282f, the third camera 283 having the third field of view, and the distance sensor 276 are arranged as shown in diagrams (b).

According to various embodiments, the processor 220 may determine an area close to the center of the first field of view 281f as a first region of interest 276r-1 from among the areas where the first field of view 281f and the field of view 276f overlap, an area close to the center of the second field of view 282f as a second region of interest 276r-2 from among the areas where the second field of view 282f and the field of view 276f overlap, and an area close to the center of the third field of view 283f as a third region of interest 276r-3 from among the areas where the third field of view 283f and the field of view 276f overlap.

Referring to FIGS. 4B and 4C, since the area where the field of view 276f of the distance sensor 276 overlaps the first field of view 281f, the second field of view 282f, and the third field of view 283f varies depending on the structural arrangement of the first camera 281, the second camera 282, the third camera 283, and the distance sensor 276, the processor 220 may differently determine the region of interest.

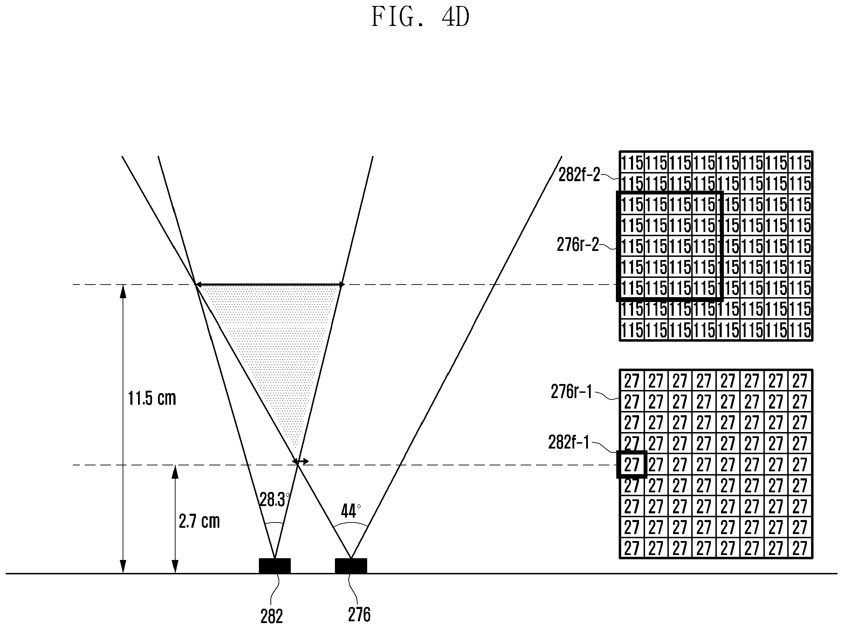

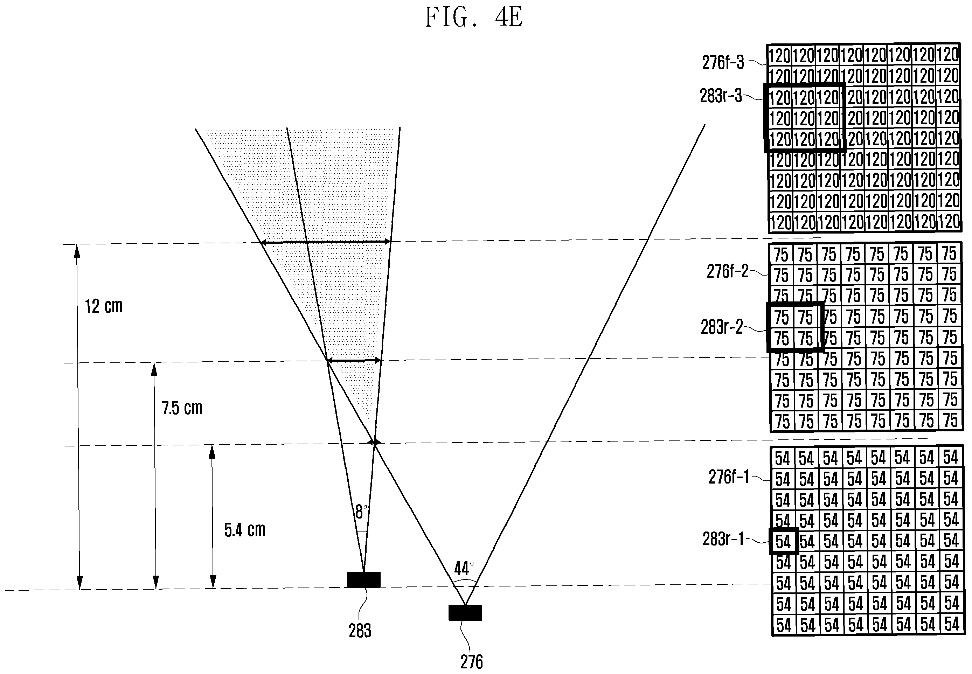

FIGS. 4D and 4E are diagrams illustrating an operation in which the processor 220 may determine a region of interest of the distance sensor 276 according to various embodiments.

According to various embodiments, the processor 220 may determine the region of interest of the distance sensor 276 in response to the distance between the distance sensor 276 and the subject, the arrangement of the camera determined to be used for photographing, and the field of view.

FIG. 4D is a diagram illustrating the area where the field of view of the distance sensor 276 overlaps the field of view of the second camera 282 in response to the case where the camera determined to be used for photographing is the second camera 282 and a change in the distance between the distance sensor 276 and the area to be photographed.

According to an embodiment, the distance sensor 276 having a field of view (e.g., 44 degrees) and the second camera 282 having a second field of view (e.g., 28.3 degrees) may be arranged as shown in the drawing.

According to an embodiment, an area 282r-1 where the field of view 276f-1 of the distance sensor 276 and the field of view of the second camera 282 overlap at a first distance (e.g., 2.7 cm) may be different from the area 282r-2 where the field of view 276f-2 of the distance sensor 276 and the field of view of the second camera 282 overlap at a second distance (e.g., 11.5 cm) as shown in the drawing. For example, the processor 220 may determine a region of interest in response to the case where the camera determined to be used for photographing is the second camera 282 and a change in the distance between the distance sensor 276 and the area to be photographed.

FIG. 4E is a diagram illustrating the area where the field of view of the distance sensor 276 overlaps the field of view of the third camera 283 in response to the case where the camera determined to be used for photographing is the third camera 283 and a change in the distance between the distance sensor 276 and the area to be photographed.

According to an embodiment, the distance sensor 276 having a field of view (e.g., 44 degrees) and the third camera 283 having a third field of view (e.g., 8 degrees) may be arranged as shown in the drawing.

According to an embodiment, an area 283r-1 where the field of view 276f-1 of the distance sensor 276 and the field of view of the third camera 283 overlap at a first distance (e.g., 5.4 cm), an area 283r-2 where the field of view 276f-2 of the distance sensor 276 and the field of view of the third camera 283 overlap at a second distance (e.g., 7.5 cm), and an area 283r-3 where the field of view 276f-3 of the distance sensor 276 and the field of view of the third camera 283 overlap at a third distance (e.g., 12 cm) may be different from each other as shown in the drawing. For example, the processor 220 may determine a region of interest in response to the case where the camera determined to be used for photographing is the third camera 283 and a change in the distance between the distance sensor 276 and the area to be photographed.

Referring to FIGS. 4D and 4E, since the area where the field of view 276f of the distance sensor 276 overlaps the field of view of the camera varies depending on the camera selected for photographing and the distance between the distance sensor 276 and the area to be photographed, the processor 220 may differently determine the region of interest.

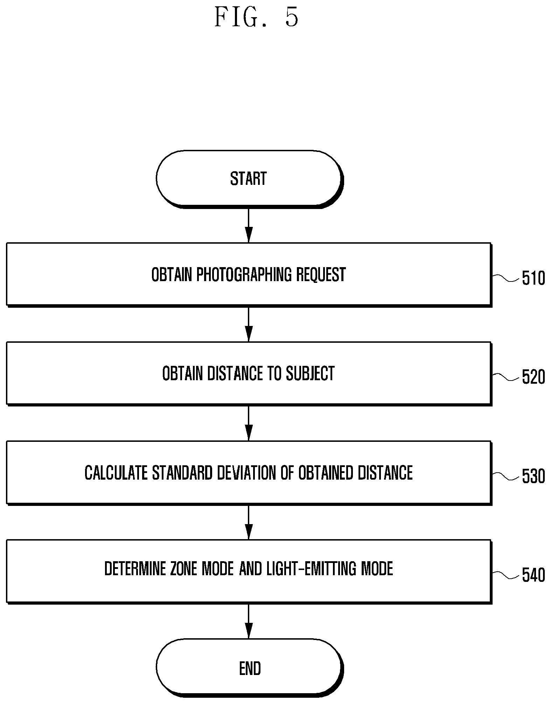

FIG. 5 is a flowchart illustrating a method of controlling an electronic device 200 (e.g., the electronic device 200 in FIG. 2) such that a processor 220 (e.g., the processor 220 in FIG. 2) determines a mode related to a distance sensor 276 (e.g., the distance sensor 276 in FIG. 2).

According to various embodiments, the processor 220 may obtain a photographing request in operation 510.

According to an embodiment, the processor 220 may obtain a photographing request in response to the case where the user executes an application (e.g., a camera photographing application or a video call application) that uses a camera.

According to various embodiments, the processor 220 may obtain a distance to an external subject in operation 520.

According to an embodiment, the processor 220 may obtain the distance to an external subject through the distance sensor 276. For example, the distance sensor 276 may measure the distance to the subject using a time-of-flight (TOF) method.

According to an embodiment, the distance sensor 276 may include a light emitter that outputs light particles at an angle within the field of view (FOV) and a light receiver (sensor) that obtains light particles that are output from the light emitter and then reflected by the subject. For example, the distance sensor 276 may measure the distance, based on the time of flight taken for the light or radio waves output from the distance sensor to be reflected by the subject and return thereto. For example, the distance sensor 276 may determine the distance to the subject to be a value obtained by multiplying the time of flight by the speed of light and dividing this in half. For example, the distance sensor 276 may measure the distance, based on the amount of light incident on the light receiver. The distance sensor 276 may determine that the smaller the amount of light received by the light receiver, the longer the distance and that the larger the amount of light received by the distance sensor, the shorter the distance. For example, the distance sensor 276 may measure the distance, based on a change in the phase of light obtained by the light receiver.

According to various embodiments, the processor 220 may calculate a standard deviation of the obtained distance in operation 530.

The distance sensor 276 according to an embodiment may include a plurality of cells including a plurality of light emitters and a plurality of light receivers, and the processor 220 may obtain a plurality of pieces of distance data from the plurality of cells.

According to an embodiment, the processor 220 may calculate a standard deviation of the plurality of pieces of distance data obtained from the plurality of cells of the distance sensor 276. For example, the processor 220, in response to the case where the distance sensor 276 includes a plurality of cells arranged in n rows and m columns and measures n x m pieces of distance data, may calculate the standard deviation of the n x m pieces of distance data.

According to various embodiments, the processor 220 may determine a mode, based on the obtained distance and standard deviation, in operation 540.

According to an embodiment, the processor 220 may determine a mode for distinguishing a plurality of zones within the field of view of the distance sensor 276. The modes for distinguishing a plurality of zones are modes in which the size of the area for measuring one piece of distance data differs therebetween, and may include a first zone mode and/or a second zone mode. For example, the modes for distinguishing a plurality of zones are modes in which the number of cells for measuring one piece of distance data differs therebetween, and may include a first zone mode in which a plurality of cells measures one piece of distance data and/or a second zone mode in which a single cell measures one piece of distance data.

For example, in the first zone mode, the processor 220, in response to the case that the distance sensor 276 includes a plurality of cells arranged in n rows and m columns, may control the distance sensor 276 such that the area including a plurality of cells measures one piece of distance data. For example, the processor 220 may control the distance sensor 276 such that cells in 2 rows and 2 columns measure one piece of data. The processor 220, in response to the case where cells in 2 rows and 2 columns of the distance sensor 276 measure one piece of distance data, may distinguish zones in which the area for measuring one piece of distance data is arranged in n/2 rows and m/2 columns within the field of view of the distance sensor 276. For example, the processor 220, in response to the case where the distance sensor 276 includes a plurality of cells in 8 rows and 8 columns and where the zone mode is determined to be the first zone mode, may distinguish 16 zones in 4 rows and 4 columns within the field of view of the distance sensor 276.

For example, in the second zone mode, the processor 220, in response to the case where the distance sensor 276 includes a plurality of cells arranged in n rows and m columns, may control the distance sensor 276 such that a single cell measures one piece of distance data. For example, the processor 220, in response to the case where a single cell area measures one piece of distance data, may distinguish zones in which the area for measuring one piece of distance data is arranged in n rows and m columns within the field of view of the distance sensor 276. For example, the processor 220, in response to the case where the distance sensor 276 includes a plurality of cells in 8 rows and 8 columns and where the zone mode is determined to be the second mode, may distinguish 64 zones in 8 rows and 8 columns within the field of view of the distance sensor 276.

For example, in response to the case where the distance from the distance sensor 276 to the subject is less than d1 and where the standard deviation of the distance data is less than a first value, the processor 220 may determine the zone mode of the distance sensor 276 to be a first zone mode.

For example, in response to the case where the distance to the subject obtained from the distance sensor 276 is d1 or more or where the standard deviation of the distance data is the first value or more, the processor 220 may determine the zone mode of the distance sensor 276 to be a second zone mode.

According to an embodiment, the processor 220 may determine a light-emitting mode of the distance sensor 276.

For example, the processor 220 may control the distance sensor 276 such that the distance sensor 276 operates in a first light-emitting mode or a second light-emitting mode, based on the distance to the subject obtained from the distance sensor 276 and the standard deviation of the distance data.

For example, in response to the case where the distance to the subject is less than a specified value and where the standard deviation of the distance data is less than a specified value, the processor 220 may control the distance sensor 276 such that the distance sensor 276 operates in the first light-emitting mode. For example, the first light-emitting mode may be a mode in which the light emitter of the distance sensor 276 discontinuously outputs light particles. For example, if the subject is close to the electronic device 200, the distance data measured by the distance sensor 276 is constant, so the processor 220 may reduce the light-emitting time of the light emitter of the distance sensor 276, thereby lowering power consumption.

According to an embodiment, in response to the case where the distance to the subject is a specified value or more or where the standard deviation of the distance data is a specified value or more, the processor 220 may control the distance sensor 276 such that the distance sensor 276 operates in the second light-emitting mode. For example, the second light-emitting mode may be a mode in which the light emitter of the distance sensor 276 continuously outputs light particles. For example, if the subject is located far from the electronic device 200 or there is a plurality of subjects within the field of view of the distance sensor 276, the distance data measured by the distance sensor 276 is not constant, so the processor 220 may obtain accurate distance data by increasing the light-emitting time of the light emitter of the distance sensor 276.

The processor 220 according to various embodiments may control the distance sensor 276 to operate in the first zone mode or in the first light-emitting mode only for some areas among the plurality of cells of the distance sensor 276. For example, in response to the case where the distance to the subject is less than a specified value in some areas within the field of view of the distance sensor 276 and where the standard deviation of the distance data is less than a specified value in some areas, the processor 220 may control the distance sensor 276 such that the cells in the corresponding area operate in the first zone mode or in the first light-emitting mode.

The processor 220 according to various embodiments, in response to the determination of the zone mode and light-emitting mode of the distance sensor 276, may control the amount of power consumed by the distance sensor 276 and the maximum distance that is measurable by the distance sensor 276.

For example, Table 1 may be a table showing examples of the amount of power consumed by the distance sensor 276 and the maximum distance that is measurable by the distance sensor 276 in response to the determined zone mode and light-emitting mode.

**[Table 1]**

| Zone modes | Light-emitting modes | Power consumption | Maximum distance |
|---|---|---|---|
| First zone mode | First light-emitting mode | 41mA | 3M |
| | Second light-emitting mode | 77mA | 4M |
| Second zone mode | First light-emitting mode | 87mA | 1.7M |
| | Second light-emitting mode | 95mA | 2.7M |

Referring to Table 1, since a plurality of cells measures one piece of distance data in the first zone mode, the power consumption of the distance sensor 276 therein is less than the power consumption in the second zone mode, and the maximum measurable distance in the first zone mode may be greater than the maximum measurable distance in second zone mode. Referring to Table 1, since the light emitter emits light discontinuously in the first light-emitting mode, the power consumption of the distance sensor 276 therein may be less than the power consumption in the second light-emitting mode, and the maximum measurable distance in the first light-emitting mode may be less than the maximum measurable distance in the second light-emitting mode.

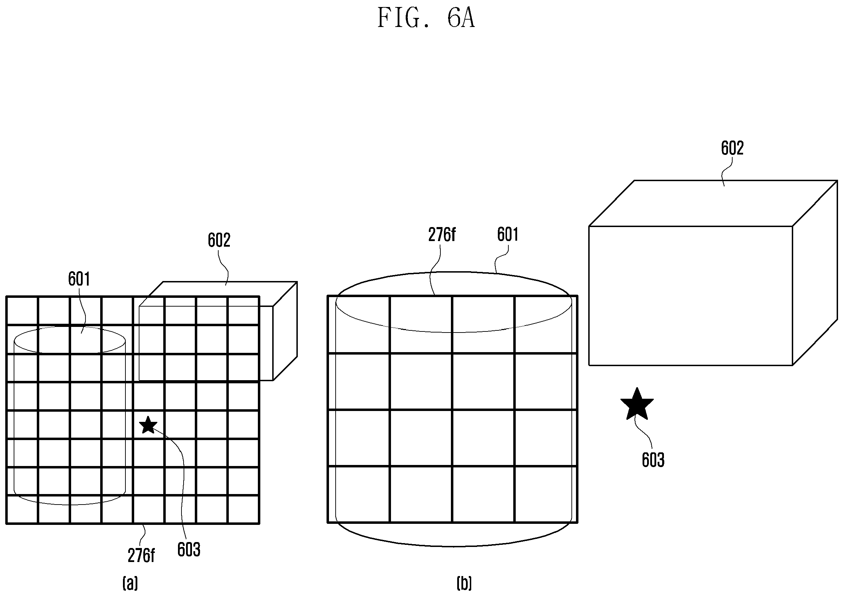

FIG. 6A is a diagram illustrating a method of controlling an electronic device 200 (e.g., the electronic device 200 in FIG. 2) such a processor 220 (e.g., the processor 220 in FIG. 2) determines a zone mode of a distance sensor 276 (e.g., the distance sensor 275 in FIG. 2) according to various embodiments.

Referring to diagram (a), in response to the case where there are a first subject 601 at a shorter distance from the distance sensor 276 and a second subject 602 and a third subject 603 at longer distances therefrom within the field of view 276f of the distance sensor, distance data values measured in a plurality of areas of the distance sensor 276 may differ from each other. For example, the distance sensor 276 may obtain distance data similar to A from the zone of the area where the first subject 601 exists, distance data similar to B from the zone of the area where the second subject 602 exists, and distance data similar to C from the zone of the area where the third subject 603 exists.

Diagram (b) may show the state in which the distance between the first subject 601 and the distance sensor 275 is shorter that those of the first subject 601, the second subject 602, and the third subject 603 in diagram (a). In response to the case where only the first subject 601 exists within the field of view 276f of the distance sensor, distance data values measured in a plurality of areas of the distance sensor 276 may be similar. For example, the distance sensor 276 may obtain distance data similar to D from the entire zone.

Therefore, in the case shown in diagram (a), the processor 220 may determine the zone mode of the distance sensor 276 to be the second zone mode. For example, in response to the case where the distance sensor 276 includes a plurality of cells arranged in n rows and m columns, the distance sensor 276 may be controlled such that a single cell measures one piece of distance data. For example, the processor 220, in response to the case where a single cell of the distance sensor 276 measures one piece of distance data, may distinguish zones in which the area for measuring one piece of distance data is arranged in n rows and m columns within the field of view of the distance sensor 276. For example, the processor 220, in response to the case where the distance sensor 276 includes a plurality of cells in 8 rows and 8 columns and where the zone mode is determined to be the second mode, may distinguish 64 zones in 8 rows and 8 columns within the field of view of the distance sensor 276.

In the case shown in diagram (b), the processor 220 may determine the zone mode of the distance sensor 276 to be the first zone mode. For example, in response to the case where the distance sensor 276 includes a plurality of cells arranged in n rows and m columns, the distance sensor 276 may be controlled such that the area including the plurality of cells measures one piece of distance data. For example, the processor 220 may control the distance sensor 276 such that cells in 2 rows and 2 columns measure one piece of data. The processor 220, in response to the case where cells in 2 rows and 2 columns of the distance sensor 276 measure one piece of distance data, may distinguish zones in which the area for measuring one piece of distance data is arranged in n/2 rows and m/2 columns within the field of view of the distance sensor 276. For example, the processor 220, in response to the case where the distance sensor 276 includes a plurality of cells in 8 rows and 8 columns and where the zone mode is determined to be the first zone mode, may distinguish 16 zones in 4 rows and 4 columns within the field of view of the distance sensor 276.

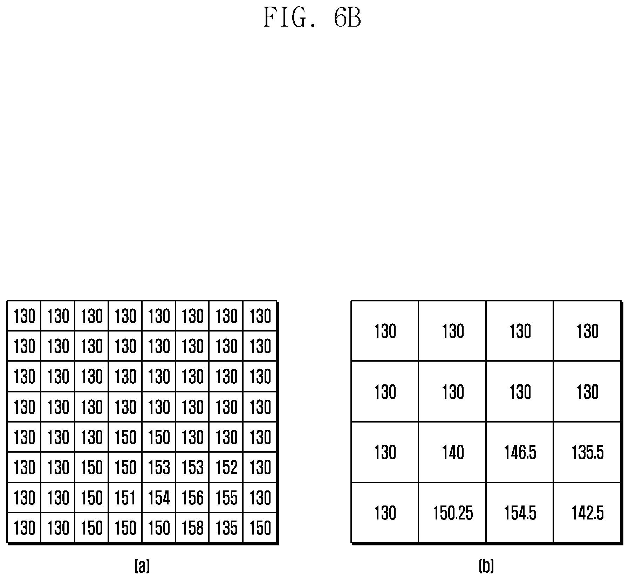

FIG. 6B is a diagram illustrating a method of controlling the electronic device 200 such that the processor 220 determines the zone mode of the distance sensor 276 according to various embodiments. For example, the values included in the respective cells in FIG. 6B indicate the distances in mm to an object measured by the distance sensor 276.

Referring to diagram (a), the processor 220 according to various embodiments, in response to the case where the distance sensor 276 includes n cells (e.g., 8x8, 64 cells), may obtain n pieces of distance data and calculate the standard deviation of n pieces of distance data.

For example, in the case shown in diagram (a), the standard deviation of n (e.g., 64) pieces of data may be calculated to be a value of about 9.72. The processor 220, in response to the case where the calculated standard deviation (e.g., about 9.72) is less than or equal to a specified value (e.g., 10) and where the distance value to the subject is less than or equal to a specified value, may determine the zone mode of the distance sensor 276 to be the first zone mode as shown in diagram (b).

For example, in the case of a subject located close to the electronic device 200 as shown in diagram (b) in FIG. 6A, a plurality of data values measured by the distance sensor 276 is similar so that the standard deviation thereof is small, so the distance sensor may be operated in the first mode as shown in diagram (b) in FIG. 6B, thereby reducing current consumption.

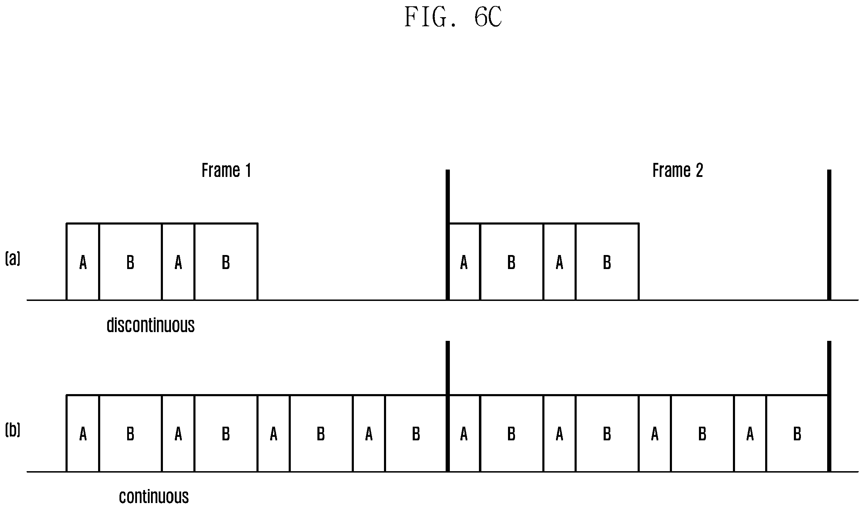

FIG. 6C is a diagram illustrating a method of controlling an electronic device such that a processor determines a distance sensor and a mode according to various embodiments.

According to various embodiments, the processor 220 may determine a light-emitting mode of the distance sensor 276.

According to an embodiment, the processor 220 may control the distance sensor 276 to operate in a first light-emitting mode or a second light-emitting mode, based on the distance to the subject and the standard deviation of the distance data.

Diagram (a) is a graph showing the light-emitting time when the distance sensor 276 operates in the first light-emitting mode according to an embodiment.

For example, in response to the case where the distance to the subject is less than a specified value and where the standard deviation of the distance data is less than a specified value, the processor 220 may control the distance sensor 276 such that the distance sensor 276 operates in the first light-emitting mode. For example, the first light-emitting mode may be a mode in which the light emitter of the distance sensor 276 discontinuously outputs light particles. For example, if the subject is close to the electronic device 200, the distance data measured by the distance sensor 276 is constant, so the processor 220 may reduce the light-emitting time A and B of the light emitter of the distance sensor 276, thereby lowering power consumption of the electronic device 200. For example, the processor 220 may discontinuously output light particles such that the light emitter of the distance sensor 276 emits light A and B for a specified time and then stops emitting light for a specified time while photographing a first frame (frame 1), and such that the light emitter of the distance sensor 276 emits light A and B for a specified time and then stops emitting light for a specified time while photographing a second frame (frame 2).

Diagram (b) is a graph showing the light-emitting time when the distance sensor 276 operates in the second light-emitting mode according to an embodiment.

For example, in response to the case where the distance to the subject is equal to or greater than a specified value or where the standard deviation of the distance data is equal to or greater than a specified value, the processor 220 may control the distance sensor 276 such that the distance sensor 276 operates in the second light-emitting mode. For example, the second light-emitting mode may be a mode in which the light emitter of the distance sensor 276 continuously outputs light particles. For example, if the distance sensor 276 is unable to measure the distance to the subject because the subject is located far from the electronic device 200, or if there is a plurality of subjects within the field of view of the distance sensor 276, the processor 220 may obtain accurate distance data by increasing the light-emitting time A and B of the light emitter of the distance sensor 276.

For example, the processor 220 may continuously output light particles such that the light emitter of the distance sensor 276 emits light A and B while photographing the first frame (frame 1) and emits light A and B while photographing the second frame (frame 2).

FIGS. 7A and 7B are flowcharts illustrating a method of controlling an electronic device such that a processor 220 (e.g., the processor 220 in FIG. 2) according to various embodiments determines a camera to be used for photographing, a region of interest of a distance sensor 276 (e.g., the distance sensor 276 in FIG. 2), and/or a mode related to the distance sensor 276.

The processor 220 according to various embodiments may determine the camera to be used for photographing to be a second camera 282 (e.g., the second camera 282 in FIG. 2) and execute a zoom magnification of 1 time in operation 710.

According to an embodiment, the processor 220, in response to obtaining a photographing request according to the operation in which the user executes an application (e.g., a camera photographing application or a video call application) that uses a camera, may determine
the camera to be used for photographing to be the second camera 282 and execute a zoom magnification of 1 time.

The processor 220 according to various embodiments may identify whether the zoom magnification is less than N1 times (e.g., 3 times) in operation 721. For example, the processor 220 may identify the photographing magnification corresponding to a user input.

The processor 220 according to various embodiments, in response to the case where the zoom magnification is less than N1 times ("Yes" in operation 721), may identify whether the distance to the subject is less than d1 (e.g., 28 cm) in operation 731.

The processor 220 according to various embodiments, in response to the case where the distance to the subject is less than d1 ("Yes" in operation 731), may determine the camera to be used for photographing as a first camera 281 (e.g., the first camera 281 in FIG. 2), determine the zone mode of the distance sensor 276 as a first zone mode (e.g., 4x4 mode), determine the light-emitting mode as a first light-emitting mode (e.g., 10fps mode), and determine the region of interest as a first region of interest (e.g., UW camera area) in operation 741.

The processor 220 according to various embodiments, in response to the case where the distance to the subject is equal to or greater than d1 ("No" in operation 731), may determine the camera to be used for photographing as the second camera 282, determine the zone mode of the distance sensor 276 as a second zone mode (e.g., 8x8 mode), determine the light-emitting mode as the first light-emitting mode, and determine the region of interest as a second region of interest (e.g., wide camera area) in operation 742.

The processor 220 according to various embodiments may identify whether the distance to the subject is equal to or greater than d2 in operation 732.

The processor 220 according to various embodiments may operate according to operation 742 in response to the case where the distance to the subject is equal to or greater than d2 (e.g., 30 cm) ("Yes" in operation 734).

The processor 220 according to various embodiments may operate according to operation 741 in response to the case where the distance to the subject is less than d2 ("No" in operation 734).

The processor 220 according to various embodiments, in response to the case where the zoom magnification is equal to or greater than N1 times ("No" in operation 721), may identify whether the zoom magnification is less than N2 times (e.g., 10 times) in operation 722.

The processor 220 according to various embodiments, in response to the case where the zoom magnification is less than N2 times ("Yes" in operation 722), may identify whether the distance to the subject is less than d3 (e.g., 40 cm) in operation 733.

The processor 220 according to various embodiments, in response to the case where the distance to the subject is less than d3 ("Yes" in operation 733), may determine the camera to be used for photographing as the second camera 282, determine the zone mode of the distance sensor 276 as the second zone mode, determine the light-emitting mode as the first light-emitting mode, and determine the region of interest as the second region of interest in operation 743.

The processor 220 according to various embodiments, in response to the case where the distance to the subject is equal to or greater than d3 ("No" in operation 733), may determine the camera to be used for photographing as a third camera 283 (e.g., the third camera 283 in FIG. 2), determine the zone mode of the distance sensor 276 as the second zone mode, determine the light-emitting mode as the first light-emitting mode, and determine the region of interest as a third region of interest (e.g., TELE1 camera area) in operation 744.

The processor 220 according to various embodiments may identify whether the distance to the subject is equal to or greater than d4 in operation 734.

The processor 220 according to various embodiments may operate according to operation 744 in response to the case where the distance to the subject is equal to or greater than d4 (e.g., 50 cm) ("Yes" in operation 734).

The processor 220 according to various embodiments may operate according to operation 743 in response to the case where the distance to the subject is less than d4 ("No" in operation 733).

The processor 220 according to various embodiments, in response to the case where the zoom magnification is N2 times or more ("No" in operation 722), may identify whether the distance to the subject is less than d5 (e.g., 80 cm) in operation 735.

The processor 220 according to various embodiments, in response to the case where the distance to the subject is less than d5 ("Yes" in operation 735), may determine the camera to be used for photographing as the third camera 283, determine the zone mode of the distance sensor 276 as the second zone mode, determine the light-emitting mode as the first light-emitting mode, and determine the region of interest as the third region of interest in operation 745.

The processor 220 according to various embodiments, in response to the case where the distance to the subject is equal to or greater than d5 ("No" in operation 735), may determine the camera to be used for photographing as a fourth camera (not shown), determine the zone mode of the distance sensor 276 as the second zone mode, determine the light-emitting mode as the second light-emitting mode, and determine the region of interest as a fourth region of interest in operation 746.

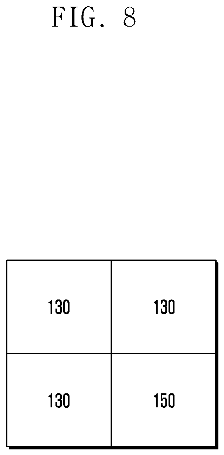

FIG. 8 is a diagram illustrating a method of controlling an electronic device 200 (e.g., the electronic device 200 in FIG. 2) such that a processor 220 (e.g., the processor 220 in FIG. 2) operates an auxiliary zone mode of a distance sensor 276 (e.g., the distance sensor 276 in FIG. 2) according to various embodiments.

The processor 220 according to various embodiments may operate an auxiliary mode to further obtain distance data while operating the distance sensor 276 in the first zone mode or the second zone mode, thereby improving the accuracy of the obtained distance data. For example, the processor 220 may further obtain n/4 x m/4 pieces of distance data in addition to n x m pieces of distance data in the first zone mode or n/2 x m/2 pieces of distance data in the second zone mode.

The processor 220 according to various embodiments may operate an auxiliary mode to further obtain distance data while operating the distance sensor 276 in the second light-emitting mode, thereby improving the accuracy of the obtained distance data.

According to an embodiment, in a third mode, the processor 220 may control the distance sensor 276 to further measure distance data while the distance sensor 276 is measuring the distance in the first zone mode for measuring n x m pieces of distance data or in the second zone mode for measuring n/2 x m/2 pieces of data.

For example, the processor 220, in response to the case where the distance sensor 276 includes a plurality of cells arranged in n rows and m columns, may control the distance sensor 276 such that the plurality of cells measures one piece of distance data. For example, the processor 220 may control the distance sensor 276 such that cells in 4 rows and 4 columns of the distance sensor 276 measure one piece of data. The processor 220, in response to the case where the distance sensor 276 measures n/4 x m/4 pieces of distance data, may distinguish zones in n/4 rows and m/4 columns within the field of view of the distance sensor 276. For example, the processor 220, in response to the case where the distance sensor 276 includes a plurality of cells in 8 rows and 8 columns and where the zone mode is determined to be the first zone mode, may distinguish 4 zones in 2 rows and 2 columns within the field of view of the distance sensor 276.

An electronic device 200 according to various embodiments of the disclosure may include a distance sensor 276, a first camera 281, a second camera 282 having a different field of view from the first camera 281, and a processor 220, wherein the processor 220 may be configured to obtain a photographing request, in response to the photographing request, obtain, from the distance sensor 276, the distance between a subject included within the field-of-view area of the distance sensor 276 and the distance sensor 276, determine the first camera 281 to be used for photographing, based on the distance to the subject, and photograph the subject, based on a region of interest (ROI) of the distance sensor 276 configured based on a field of view of the determined first camera 281 and the distance to the subject.

In the electronic device 200 according to various embodiments of the disclosure, the first camera 281 may be at least one of an ultra-wide camera, a wide angle camera, and a telecamera, and the second camera 282 may have a narrower field of view than the first camera 281 and may be located in a structurally different location from the first camera 281.

In the electronic device 200 according to various embodiments of the disclosure, the processor 220 may be configured to determine a camera to be used for photographing as the first camera 281 in response to the case where the distance to the subject is less than a first distance and determine a camera to be used for photographing as the second camera 282 in response to the case where the distance to the subject is equal to or greater than the first distance.

In the electronic device 200 according to various embodiments of the disclosure, the distance sensor 276 includes a plurality of cells and measures a plurality of pieces of distance data, and the processor 220 may be configured to distinguish a plurality of zones, based on the plurality of pieces of distance data, within the field of view of the distance sensor 276, and photograph the subject, based on a region of interest (ROI) corresponding to at least some of the plurality of zones.

In the electronic device 200 according to various embodiments of the disclosure, the processor 220 may be configured to photograph the subject, based on a region of interest (ROI) of the distance sensor 276, which is an area included in a specified range from the center of the field of view of the first camera 281 among areas where the field of view of the distance sensor 276 and the field of view of the determined first camera 281 overlap at the distance to the subject, among the plurality of zones.

In the electronic device 200 according to various embodiments of the disclosure, the processor 220 may be configured to determine a mode of distinguishing the zones of the distance sensor 276 as a first zone mode in which a single cell measures one piece of distance data to distinguish a plurality of zones corresponding to the plurality of cells included in the distance sensor 276 within the field of view of the distance sensor 276 in response to the case where the distance to the subject is equal to or greater than a specified value or where the standard deviation of the plurality of pieces of distance data is equal to or greater than a specified value, and determine a mode of distinguishing the zones of the distance sensor 276 as a second zone mode in which two or more cells measure one piece of distance data to distinguish a fewer number of zones than the plurality of cells included in the distance sensor 276 within the field of view of the distance sensor 276 in response to the case where the distance to the subject is less than the specified value and where the standard deviation of the plurality of pieces of distance data is less than the specified value.

**In** the electronic device 200 according to various embodiments of the disclosure, the processor 220 may be configured to operate an auxiliary mode to obtain additional distance data from the distance sensor 276 while operating the distance sensor 276 in the first zone mode or the second zone mode.

In the electronic device 200 according to various embodiments of the disclosure, the processor 220 may be configured to control the distance sensor 276 such that the distance sensor 276 emits light discontinuously in response to the case where the distance to the subject is less than a specified value and where the standard deviation of the plurality of pieces of distance data is less than a specified value, and control the distance sensor 276 such that the distance sensor 276 emits light continuously in response to the case where the distance to the subject is equal to or greater than the specified value or where the standard deviation of the plurality of pieces of distance data is equal to or greater than the specified value.

**In** the electronic device 200 according to various embodiments of the disclosure, the processor 220 may be configured to determine a mode of distinguishing the zones of the distance sensor 276 as a first zone mode in which a single cell measures one piece of distance data to distinguish a plurality of zones corresponding to the plurality of cells included in the distance sensor 276 within the field of view of the distance sensor 276 in response to the case where the distance to the subject is less than a specified value and where the standard deviation of the plurality of pieces of distance data is less than a specified value for some of the plurality of cells of the distance sensor 276.

In the electronic device 200 according to various embodiments of the disclosure, the processor 220 may be configured to control the distance sensor 276 such that the distance sensor 276 emits light discontinuously for some of the plurality of cells of the distance sensor 276 in response to the case where the distance to the subject is less than a specified value and where the standard deviation of the plurality of pieces of distance data is less than a specified value.

A method for operating an electronic device 200 according to various embodiments of the disclosure may include obtaining a photographing request, in response to the photographing request, obtaining, from the distance sensor 276, the distance between a subject included within the field-of-view area of the distance sensor 276 and the distance sensor 276, determining a first camera 281 to be used for photographing, based on the distance to the subject, from among the first camera 281 and a second camera 282 having a different field of view therefrom, and photographing the subject, based on a region of interest (ROI) of the distance sensor 276 configured based on a field of view of the determined first camera 281 and the distance to the subject.

In the method for operating an electronic device 200 according to various embodiments of the disclosure, the first camera 281 may be at least one of an ultra-wide camera, a wide angle camera, and a telecamera, and the second camera 282 may have a narrower field of view than the first camera 281 and may be located in a structurally different location from the first camera 281.

The method for operating an electronic device 200 according to various embodiments of the disclosure may include determining a camera to be used for photographing as the first camera 281 in response to the case where the distance to the subject is less than a first distance, and determining a camera to be used for photographing as the second camera 282 in response to the case where the distance to the subject is equal to or greater than the first distance.

The method for operating an electronic device 200 according to various embodiments of the disclosure may include causing the distance sensor 276 including a plurality of cells to measure a plurality of pieces of distance data, distinguishing a plurality of zones, based on the plurality of pieces of distance data, within the field of view of the distance sensor 276, and photographing the subject, based on a region of interest (ROI) corresponding to at least some of the plurality of zones.

The method for operating an electronic device 200 according to various embodiments of the disclosure may include photographing the subject, based on a region of interest (ROI) of the distance sensor 276, which is an area included in a specified range from the center of the field of view of the first camera 281 among areas where the field of view of the distance sensor 276 and the field of view of the determined first camera 281 overlap at the distance to the subject, among the plurality of zones.

The method for operating an electronic device 200 according to various embodiments of the disclosure may include determining a mode of distinguishing the zones of the distance sensor 276 as a first zone mode in which a single cell measures one piece of distance data to distinguish a plurality of zones corresponding to the plurality of cells included in the distance sensor within the field of view of the distance sensor 276 in response to the case where the distance to the subject is equal to or greater than a specified value or where the standard deviation of the plurality of pieces of distance data is equal to or greater than a specified value, and determining a mode of distinguishing the zones of the distance sensor 276 as a second zone mode in which two or more cells measure one piece of distance data to distinguish a fewer number of zones than the plurality of cells included in the distance sensor 276 within the field of view of the distance sensor 276 in response to the case where the distance to the subject is less than the specified value and where the standard deviation of the plurality of pieces of distance data is less than the specified value.

The method for operating an electronic device 200 according to various embodiments of the disclosure may include operating an auxiliary mode to obtain additional distance data from the distance sensor 276 while operating the distance sensor 276 in the first zone mode or the second zone mode.

The method for operating an electronic device 200 according to various embodiments of the disclosure may include controlling the distance sensor 276 such that the distance sensor 276 emits light discontinuously in response to the case where the distance to the subject is less than a specified value and where the standard deviation of the plurality of pieces of distance data is less than a specified value, and controlling the distance sensor 276 such that the distance sensor 276 emits light continuously in response to the case where the distance to the subject is equal to or greater than the specified value or where the standard deviation of the plurality of pieces of distance data is equal to or greater than the specified value.

The method for operating an electronic device 200 according to various embodiments of the disclosure may include determining a mode of distinguishing the zones of the distance sensor as a first zone mode in which a single cell measures one piece of distance data to distinguish a plurality of zones corresponding to the plurality of cells included in the distance sensor 276 within the field of view of the distance sensor 276 in response to the case where the distance to the subject is less than a specified value and where the standard deviation of the plurality of pieces of distance data is less than a specified value for some of the plurality of cells of the distance sensor 276.

The method for operating an electronic device 200 according to various embodiments of the disclosure may include controlling the distance sensor 276 such that the distance sensor 276 emits light discontinuously for some of the plurality of cells of the distance sensor 276 in response to the case where the distance to the subject is less than a specified value and where the standard deviation of the plurality of pieces of distance data is less than a specified value.

It should be appreciated that various embodiments of the disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

In addition, the embodiments disclosed in this document and the drawings are merely presented as specific examples to easily explain the technical concept according to the embodiments disclosed in this document and to aid understanding of the embodiments disclosed in this document, but are not intended to limit the scope of the embodiments disclosed in this document. Therefore, the scope of the various embodiments disclosed in this document must be construed to encompass all changes or modifications derived based on the technical idea of the various embodiments disclosed in this document, as well as the embodiments disclosed herein as long as they fall into the scope of the appended claims

## Claims

1. An electronic device (101, 200) comprising:
a distance sensor (276), wherein the distance sensor (276) includes a plurality of cells and measures a plurality of pieces of distance data;
a first camera (281);
a second camera (282) having a different field of view (282f) than a field of view (281f) of the first camera (281); and
at least one processor (120, 220), comprising processing circuitry,
wherein at least one processor (120, 220), individually and/or collectively, is configured to:
obtain (310) a photographing request;
in response to the photographing request, control the distance sensor (276) such that the distance sensor (276) operates in a first light-emitting mode or a second light-emitting mode based on a distance to a subject and a standard deviation of the plurality of pieces of distance data;
obtain (320), from the distance sensor (276), the distance between the subject included within the field-of-view (276f) area of the distance sensor (276) and the distance sensor (276);
determine (330) the first camera (281) to be used for photographing, based on the distance to the subject; and
photograph the subject, based on a region of interest, ROI, (276r-1) of the distance sensor (276) configured based on a field of view of the determined first camera (281) and the distance to the subject.

2. The electronic device according to claim 1, wherein the first camera is at least one of an ultra-wide camera, a wide angle camera, and a telecamera, and
wherein the second camera has a narrower field of view than the field of view of the first camera and is located in a structurally different location from the first camera.

3. The electronic device according to claim 2, wherein at least one processor, individually and/or collectively, is configured to:
determine a camera to be used for photographing as the first camera in response to the distance to the subject being less than a first distance; and
determine a camera to be used for photographing as the second camera in response to the distance to the subject being equal to or greater than the first distance.

4. The electronic device according to claim 1, wherein at least one processor, individually and/or collectively, is configured to:
distinguish a plurality of zones, based on the plurality of pieces of distance data, within the field of view of the distance sensor; and
photograph the subject, based on a region of interest, ROI, corresponding to at least some of the plurality of zones.

5. The electronic device according to claim 4, wherein at least one processor, individually and/or collectively, is configured to photograph the subject, based on a region of interest, ROI, of the distance sensor, which is an area included in a specified range from the center of the field of view of the first camera among areas where the field of view of the distance sensor and the field of view of the determined first camera overlap at the distance to the subject, among the plurality of zones.

6. The electronic device according to claim 4, wherein at least one processor, individually and/or collectively, is configured to:
determine a mode of distinguishing the zones of the distance sensor as a first zone mode in which a single cell measures one piece of distance data to distinguish a plurality of zones corresponding to the plurality of cells included in the distance sensor within the field of view of the distance sensor in response to the distance to the subject being equal to or greater than a first specified value or where the standard deviation of the plurality of pieces of distance data is equal to or greater than a second specified value; and
determine a mode of distinguishing the zones of the distance sensor as a second zone mode in which two or more cells measure one piece of distance data to distinguish a fewer number of zones than the plurality of cells included in the distance sensor within the field of view of the distance sensor in response to the distance to the subject being less than the first specified value and where the standard deviation of the plurality of pieces of distance data is less than the second specified value.

7. The electronic device according to claim 6, wherein at least one processor, individually and/or collectively, is configured to improve accuracy of the distance data by obtaining additional distance data from the distance sensor while operating the distance sensor in the first zone mode or the second zone mode.

8. The electronic device according to claim 1, wherein:
the first light-emitting mode comprises a mode in which the distance sensor emits light discontinuously in response to the distance to the subject being less than a first specified value and where the standard deviation of the plurality of pieces of distance data is less than a second specified value; and
the second light-emitting mode comprises a mode in which the distance sensor emits light continuously in response to the distance to the subject being equal to or greater than the first specified value or where the standard deviation of the plurality of pieces of distance data is equal to or greater than the second specified value.

9. The electronic device according to claim 4, wherein at least one processor, individually and/or collectively, is configured to determine a mode of distinguishing the zones of the distance sensor as a first zone mode in which a single cell measures one piece of distance data to distinguish a plurality of zones corresponding to the plurality of cells included in the distance sensor within the field of view of the distance sensor in response to the distance to the subject being less than a first specified value and where the standard deviation of the plurality of pieces of distance data is less than a second specified value for some of the plurality of cells of the distance sensor.

10. The electronic device according to claim 1,
wherein the first light-emitting mode comprises a mode in which the distance sensor emits light discontinuously for some of the plurality of cells of the distance sensor in response to the distance to the subject being less than a first specified value and where the standard deviation of the plurality of pieces of distance data is less than a second specified value.

11. A method for operating an electronic device (101, 200), the method comprising:
obtaining (310) a photographing request;
in response to the photographing request, causing a distance sensor (276) including a plurality of cells to measure a plurality of pieces of distance data;
controlling the distance sensor (276) such that the distance sensor (276) operates in a first light-emitting mode or a second light-emitting mode based on a distance to a subject and a standard deviation of the plurality of pieces of distance data;
obtaining (320), from the distance sensor (276), a distance between the subject included within the field-of-view (276f) area of the distance sensor (276) and the distance sensor (276);
determining (330) a first camera (281) to be used for photographing, based on the distance to the subject, from among the first camera (281) and a second camera (282) having a different field of view (282f) therefrom; and
photographing the subject, based on a region of interest, ROI, (276r-1) of the distance sensor (276) configured based on a field of view (276f) of the determined first camera (281) and the distance to the subject.

12. The method for operating an electronic device according to claim 11, wherein the first camera is at least one of an ultra-wide camera, a wide angle camera, and a telecamera, and
wherein the second camera has a narrower field of view than a field of view of the first camera and is located in a structurally different location from the first camera.

13. The method for operating an electronic device according to claim 12, comprising:
determining a camera to be used for photographing as the first camera in response to the distance to the subject being less than a first distance; and
determining a camera to be used for photographing as the second camera in response to the distance to the subject being equal to or greater than the first distance.

14. The method for operating an electronic device according to claim 11, comprising:
causing the distance sensor including a plurality of cells to measure a plurality of pieces of distance data;
distinguishing a plurality of zones, based on the plurality of pieces of distance data, within the field of view of the distance sensor; and
photographing the subject, based on a region of interest, ROI, corresponding to at least some of the plurality of zones.

15. The method for operating an electronic device according to claim 14, comprising photographing the subject, based on a region of interest, ROI, of the distance sensor, which is an area included in a specified range from the center of the field of view of the first camera among areas where the field of view of the distance sensor and the field of view of the determined first camera overlap at the distance to the subject, among the plurality of zones.

## Patentansprüche

1. Elektronische Vorrichtung (101, 200), umfassend:
einen Abstandssensor (276), wobei der Abstandssensor (276) eine Vielzahl von Zellen einschließt und eine Vielzahl von Abstandsdatenelementen misst;
eine erste Kamera (281);
eine zweite Kamera (282) mit einem anderen Sichtfeld (282f) als ein Sichtfeld (281f) der ersten Kamera (281); und
zumindest einen Prozessor (120, 220), umfassend eine Verarbeitungsschaltung,
wobei zumindest ein Prozessor (120, 220) einzeln und/oder gemeinsam zu Folgendem konfiguriert ist:
Erhalten (310) einer Fotografieranforderung;
als Reaktion auf die Fotografieranforderung den Abstandssensor (276) zu steuern, sodass der Abstandssensor (276) in einem ersten lichtemittierenden Modus oder einem zweiten lichtemittierenden Modus basierend auf einem Abstand zu einem Subjekt und einer Standardabweichung der Vielzahl von Abstandsdatenelementen betrieben wird;
Erhalten (320), von dem Abstandssensor (276), des Abstands zwischen dem Subjekt, das in dem Sichtfeldbereich (276f) des Abstandssensors (276) eingeschlossen ist, und dem Abstandssensor (276);
Bestimmen (330) der ersten Kamera (281), zum Fotografieren verwendet zu werden, basierend auf dem Abstand zu dem Subjekt; und
Fotografieren des Subjekts basierend auf einer Region von Interesse, ROI (276r-1) des Abstandssensors (276), die basierend auf einem Sichtfeld der bestimmten ersten Kamera (281) und dem Abstand zu dem Subjekt konfiguriert ist.

2. Elektronische Vorrichtung gemäß Anspruch 1, wobei die erste Kamera zumindest eines von einer Ultra-Weitwinkelkamera, einer Weitwinkelkamera und einer Telekamera ist und wobei die zweite Kamera ein engeres Sichtfeld als das Sichtfeld der ersten Kamera aufweist und an einer strukturell anderen Stelle als die erste Kamera positioniert ist.

3. Elektronische Vorrichtung gemäß Anspruch 2, wobei zumindest ein Prozessor einzeln und/oder gemeinsam zu Folgendem konfiguriert ist:
Bestimmen einer Kamera, zum Fotografieren als die erste Kamera verwendet zu werden, als Reaktion darauf, dass der Abstand zu dem Subjekt kleiner als ein erster Abstand ist; und Bestimmen einer Kamera, zum Fotografieren als die zweite Kamera verwendet zu werden, als Reaktion darauf, dass der Abstand zu dem Subjekt gleich oder größer als der erste Abstand ist.

4. Elektronische Vorrichtung gemäß Anspruch 1, wobei zumindest ein Prozessor einzeln und/oder gemeinsam zu Folgendem konfiguriert ist:
Unterscheiden einer Vielzahl von Zonen, basierend auf der Vielzahl von Abstandsdatenelementen, innerhalb des Sichtfelds des Abstandssensors; und
Fotografieren des Subjekts basierend auf einer Region von Interesse, ROI, die zumindest einigen aus der Vielzahl von Zonen entspricht.

5. Elektronische Vorrichtung gemäß Anspruch 4, wobei zumindest ein Prozessor einzeln und/oder gemeinsam konfiguriert ist, das Subjekt basierend auf einer Region von Interesse, ROI, des Abstandssensors zu fotografieren, welche ein Bereich ist, der in einem festgelegten Bereich von der Mitte des Sichtfelds der ersten Kamera unter Bereichen, in denen das Sichtfeld des Abstandssensors und das Sichtfeld der bestimmten ersten Kamera an dem Abstand zu dem Subjekt überlappen, unter der Vielzahl von Zonen eingeschlossen ist.

6. Elektronische Vorrichtung gemäß Anspruch 4, wobei zumindest ein Prozessor einzeln und/oder gemeinsam zu Folgendem konfiguriert ist:
Bestimmen eines Modus zum Unterscheiden der Zonen des Abstandssensors als einen ersten Zonenmodus, in welchem eine einzelne Zelle ein Abstandsdatenelement misst, um eine Vielzahl von Zonen zu unterscheiden, die der Vielzahl von Zellen entsprechen, die in dem Abstandssensor innerhalb des Sichtfelds des Abstandssensors eingeschlossen sind, als Reaktion darauf, dass der Abstand zu dem Subjekt gleich oder größer als ein erster festgelegter Wert ist, oder wo die Standardabweichung der Vielzahl von Abstandsdatenelementen gleich oder größer als ein zweiter festgelegter Wert ist; und
Bestimmen eines Modus zum Unterscheiden der Zonen des Abstandssensors als einen zweiten Zonenmodus, in welchem zwei oder mehr Zellen ein Abstandsdatenelement messen, um eine geringere Anzahl von Zonen als die Vielzahl von Zellen zu unterscheiden, die in dem Abstandssensor innerhalb des Sichtfelds des Abstandssensors als Reaktion darauf eingeschlossen sind, dass der Abstand zu dem Subjekt geringer als der erste festgelegte Wert ist, und wo die Standardabweichung der Vielzahl von Abstandsdatenelementen geringer als der zweite festgelegte Wert ist.

7. Elektronische Vorrichtung gemäß Anspruch 6, wobei zumindest ein Prozessor einzeln und/oder gemeinsam konfiguriert ist, die Genauigkeit der Abstandsdaten zu verbessern, indem zusätzliche Abstandsdaten von dem Abstandssensor erhalten werden, während der Abstandssensor in dem ersten Zonenmodus oder dem zweiten Zonenmodus betrieben wird.

8. Elektronische Vorrichtung gemäß Anspruch 1, wobei:
der erste lichtemittierende Modus einen Modus umfasst, in welchem der Abstandssensor als Reaktion darauf diskontinuierlich Licht emittiert, dass der Abstand zu dem Subjekt geringer als ein erster festgelegter Wert ist, und wo die Standardabweichung der Vielzahl von Abstandsdatenelementen geringer als ein zweiter festgelegter Wert ist; und
der zweite lichtemittierende Modus einen Modus umfasst, in welchem der Abstandssensor kontinuierlich Licht als Reaktion darauf emittiert, dass der Abstand zu dem Subjekt gleich oder größer als der erste festgelegte Wert ist, oder wo die Standardabweichung der Vielzahl von Abstandsdatenelementen gleich oder größer als der zweite festgelegte Wert ist.

9. Elektronische Vorrichtung gemäß Anspruch 4, wobei zumindest ein Prozessor einzeln und/oder gemeinsam konfiguriert ist, einen Modus zum Unterscheiden der Zonen des Abstandssensors als einen ersten Zonenmodus zu bestimmen, in welchem eine einzelne Zelle ein Abstandsdatenelement misst, um eine Vielzahl von Zonen zu unterscheiden, die der Vielzahl von Zellen entsprechen, die in dem Abstandssensor innerhalb des Sichtfelds des Abstandssensors eingeschlossen sind, als Reaktion darauf, dass der Abstand zu dem Subjekt geringer als ein erster festgelegter Wert ist, und wo die Standardabweichung der Vielzahl von Abstandsdatenelementen geringer als ein zweiter festgelegter Wert für einige der Vielzahl von Zellen des Abstandssensors ist.

10. Elektronische Vorrichtung gemäß Anspruch 1,
wobei der erste lichtemittierende Modus einen Modus umfasst, in welchem der Abstandssensor als Reaktion darauf diskontinuierlich Licht für einige der Vielzahl von Zellen des Abstandssensors emittiert, dass der Abstand zu dem Subjekt geringer als ein erster festgelegter Wert ist, und wo die Standardabweichung der Vielzahl von Abstandsdatenelementen geringer als ein zweiter festgelegter Wert ist.

11. Verfahren zum Betreiben einer elektronischen Vorrichtung (101, 200), wobei das Verfahren Folgendes umfasst:
Erhalten (310) einer Fotografieranforderung;
als Reaktion auf die Fotografieranforderung Bewirken, dass ein Abstandssensor (276), der eine Vielzahl von Zellen einschließt, eine Vielzahl von Abstandsdatenelementen misst;
Steuern des Abstandssensors (276), sodass der Abstandssensor (276) in einem ersten lichtemittierenden Modus oder einem zweiten lichtemittierenden Modus basierend auf einem Abstand zu einem Subjekt und einer Standardabweichung der Vielzahl von Abstandsdatenelementen betrieben wird;
Erhalten (320), von dem Abstandssensor (276), des Abstands zwischen dem Subjekt, das in dem Sichtfeldbereich (276f) des Abstandssensors (276) eingeschlossen ist, und dem Abstandssensor (276);
Bestimmen (330) einer ersten Kamera (281), zum Fotografieren verwendet zu werden, basierend auf dem Abstand zu dem Subjekt, von der ersten Kamera (281) und einer zweiten Kamera (282) mit einem anderen Sichtfeld (282f) davon; und
Fotografieren des Subjekts basierend auf einer Region von Interesse, ROI (276r-1) des Abstandssensors (276), die basierend auf einem Sichtfeld (276f) der bestimmten ersten Kamera (281) und dem Abstand zu dem Subjekt konfiguriert ist.

12. Verfahren zum Betreiben einer elektronischen Vorrichtung gemäß Anspruch 11, wobei die erste Kamera zumindest eines von einer Ultra-Weitwinkelkamera, einer Weitwinkelkamera und einer Telekamera ist und wobei die zweite Kamera ein engeres Sichtfeld als ein Sichtfeld der ersten Kamera aufweist und an einer strukturell anderen Stelle als die erste Kamera positioniert ist.

13. Verfahren zum Betreiben einer elektronischen Vorrichtung gemäß Anspruch 12, umfassend:
Bestimmen einer Kamera, zum Fotografieren als die erste Kamera verwendet zu werden, als Reaktion darauf, dass der Abstand zu dem Subjekt geringer als ein erster Abstand ist; und
Bestimmen einer Kamera, zum Fotografieren als die zweite Kamera verwendet zu werden, als Reaktion darauf, dass der Abstand zu dem Subjekt gleich oder größer als der erste Abstand ist.

14. Verfahren zum Betreiben einer elektronischen Vorrichtung gemäß Anspruch 11, umfassend:
Bewirken, dass der Abstandssensor eine Vielzahl von Zellen einschließt, um eine Vielzahl von Abstandsdatenelementen zu messen;
Unterscheiden einer Vielzahl von Zonen, basierend auf der Vielzahl von Abstandsdatenelementen, innerhalb des Sichtfelds des Abstandssensors; und
Fotografieren des Subjekts basierend auf einer Region von Interesse, ROI, die zumindest einigen aus der Vielzahl von Zonen entspricht.

15. Verfahren zum Betreiben einer elektronischen Vorrichtung gemäß Anspruch 14, umfassend Fotografieren des Subjekts basierend auf einer Region von Interesse, ROI, des Abstandssensors, welche ein Bereich ist, der in einem spezifischen Bereich von der Mitte des Sichtfelds der ersten Kamera unter Bereichen, in denen das Sichtfeld des Abstandssensors und das Sichtfeld der bestimmten ersten Kamera an dem Abstand zu dem Subjekt überlappen, unter der Vielzahl von Zonen eingeschlossen ist.

## Revendications

1. Dispositif électronique (101, 200) comprenant :
un capteur de distance (276), ledit capteur de distance (276) comprenant une pluralité de cellules et mesurant une pluralité d'éléments de données de distance ;
une première caméra (281) ;
une seconde caméra (282) présentant un champ de vision différent (282f) du champ de vision (281f) de la première caméra (281) ; et
au moins un processeur (120, 220) comprenant des circuits de traitement,
ledit au moins un processeur (120, 220), individuellement et/ou collectivement, étant configuré pour :
obtenir (310) une demande de prise de photographie ;
en réponse à la demande de prise de photographie, commander le capteur de distance (276) de sorte que le capteur de distance (276) fonctionne dans un premier mode d'émission de lumière ou un second mode d'émission de lumière sur la base d'une distance jusqu'à un sujet et d'un écart type de la pluralité d'éléments de données de distance ;
obtenir (320), en provenance du capteur de distance (276), la distance entre le sujet inclus dans la zone de champ de vision (276f) du capteur de distance (276) et le capteur de distance (276) ;
déterminer (330) la première caméra (281) devant être utilisée pour la prise de photographie, sur la base de la distance jusqu'au sujet ; et
photographier le sujet, sur la base d'une région d'intérêt, ROI, (276r-1) du capteur de distance (276) configuré sur la base d'un champ de vision de la première caméra déterminée (281) et de la distance jusqu'au sujet.

2. Dispositif électronique selon la revendication 1, ladite première caméra étant au moins une parmi une caméra ultra-large, une caméra grand angle et une télécaméra, et
ladite seconde caméra présentant un champ de vision plus étroit que le champ de vision de la première caméra et étant située dans un emplacement structurellement différent de la première caméra.

3. Dispositif électronique selon la revendication 2, au moins un processeur, individuellement et/ou collectivement, étant configuré pour :
déterminer une caméra devant être utilisée pour la prise de photographie en tant que première caméra en réponse au fait que la distance jusqu'au sujet est inférieure à une première distance ; et
déterminer une caméra devant être utilisée pour la prise de photographie en tant que seconde caméra en réponse au fait que la distance jusqu'au sujet soit supérieure ou égale à la première distance.

4. Dispositif électronique selon la revendication 1, au moins un processeur, individuellement et/ou collectivement, étant configuré pour :
distinguer une pluralité de zones, sur la base de la pluralité d'éléments de données de distance, dans le champ de vision du capteur de distance ; et
photographier le sujet, sur la base d'une région d'intérêt, ROI, correspondant à au moins certaines de la pluralité de zones.

5. Dispositif électronique selon la revendication 4, au moins un processeur, individuellement et/ou collectivement, étant configuré pour photographier le sujet, sur la base d'une région d'intérêt, ROI, du capteur de distance, qui est une zone incluse dans une plage spécifiée à partir du centre du champ de vision de la première caméra parmi les zones où le champ de vision du capteur de distance et le champ de vision de la première caméra déterminée se chevauchent à la distance jusqu'au sujet, parmi la pluralité de zones.

6. Dispositif électronique selon la revendication 4, au moins un processeur, individuellement et/ou collectivement, étant configuré pour :
déterminer un mode de distinction des zones du capteur de distance en tant que premier mode de zone dans lequel une seule cellule mesure un élément de données de distance pour distinguer une pluralité de zones correspondant à la pluralité de cellules incluses dans le capteur de distance dans le champ de vision du capteur de distance en réponse au fait que la distance jusqu'au sujet est supérieure ou égale à une première valeur spécifiée ou où l'écart type de la pluralité d'éléments de données de distance est supérieur ou égal à une seconde valeur spécifiée ; et
déterminer un mode de distinction des zones du capteur de distance en tant que second mode de zone dans lequel deux cellules ou plus mesurent un élément de données de distance pour distinguer un nombre inférieur de zones par rapport à la pluralité de cellules incluses dans le capteur de distance dans le champ de vision du capteur de distance en réponse au fait que la distance jusqu'au sujet est inférieure à la première valeur spécifiée et où l'écart type de la pluralité d'éléments de données de distance est inférieur à la seconde valeur spécifiée.

7. Dispositif électronique selon la revendication 6, au moins un processeur, individuellement et/ou collectivement, étant configuré pour améliorer la précision des données de distance en obtenant des données de distance supplémentaires en provenance du capteur de distance tout en faisant fonctionner le capteur de distance dans le premier mode de zone ou le second mode de zone.

8. Dispositif électronique selon la revendication 1 :
ledit premier mode d'émission de lumière comprenant un mode dans lequel le capteur de distance émet de la lumière de manière discontinue en réponse au fait que la distance jusqu'au sujet est inférieure à une première valeur spécifiée et où l'écart type de la pluralité d'éléments de données de distance est inférieur à une seconde valeur spécifiée ; et
ledit second mode d'émission de lumière comprenant un mode dans lequel le capteur de distance émet de la lumière en continu en réponse au fait que la distance jusqu'au sujet est supérieure ou égale à la première valeur spécifiée ou où l'écart type de la pluralité d'éléments de données de distance est supérieur ou égal à la seconde valeur spécifiée.

9. Dispositif électronique selon la revendication 4, au moins un processeur, individuellement et/ou collectivement, étant configuré pour déterminer un mode de distinction des zones du capteur de distance en tant que premier mode de zone dans lequel une seule cellule mesure un élément de données de distance pour distinguer une pluralité de zones correspondant à la pluralité de cellules incluses dans le capteur de distance dans le champ de vision du capteur de distance en réponse au fait que la distance jusqu'au sujet est inférieure à une première valeur spécifiée et où l'écart type de la pluralité d'éléments de données de distance est inférieur à une seconde valeur spécifiée pour certaines de la pluralité de cellules du capteur de distance.

10. Dispositif électronique selon la revendication 1,
ledit premier mode d'émission de lumière comprenant un mode dans lequel le capteur de distance émet de la lumière de manière discontinue pour certaines de la pluralité de cellules du capteur de distance en réponse au fait que la distance jusqu'au sujet est inférieure à une première valeur spécifiée et où l'écart type de la pluralité d'éléments de données de distance est inférieur à une seconde valeur spécifiée.

11. Procédé permettant le fonctionnement d'un dispositif électronique (101, 200), le procédé comprenant :
l'obtention (310) d'une demande de prise de photographie ;
en réponse à la demande de prise de photographie, le fait d'amener un capteur de distance (276) comprenant une pluralité de cellules à mesurer une pluralité d'éléments de données de distance ;
la commande du capteur de distance (276) de sorte que le capteur de distance (276) fonctionne dans un premier mode d'émission de lumière ou un second mode d'émission de lumière sur la base d'une distance jusqu'à un sujet et d'un écart type de la pluralité d'éléments de données de distance ;
l'obtention (320), en provenance du capteur de distance (276), d'une distance entre le sujet inclus dans la zone de champ de vision (276f) du capteur de distance (276) et le capteur de distance (276) ;
la détermination (330) d'une première caméra (281) devant être utilisée pour la prise de photographie, sur la base de la distance jusqu'au sujet, parmi la première caméra (281) et une seconde caméra (282) présentant un champ de vision différent (282f) de celle-ci ; et
la prise de photographie du sujet, sur la base d'une région d'intérêt, ROI, (276r-1) du capteur de distance (276) configuré sur la base d'un champ de vision (276f) de la première caméra déterminée (281) et de la distance jusqu'au sujet.

12. Procédé permettant le fonctionnement d'un dispositif électronique selon la revendication 11, ladite première caméra étant au moins une parmi une caméra ultra-large, une caméra grand angle et une télécaméra, et
ladite seconde caméra présentant un champ de vision plus étroit qu'un champ de vision de la première caméra et étant située dans un emplacement structurellement différent de la première caméra.

13. Procédé permettant le fonctionnement d'un dispositif électronique selon la revendication 12, comprenant :
la détermination d'une caméra devant être utilisée pour la prise de photographie en tant que première caméra en réponse au fait que la distance jusqu'au sujet est inférieure à une première distance ; et
la détermination d'une caméra devant être utilisée pour la prise de photographie en tant que seconde caméra en réponse au fait que la distance jusqu'au sujet soit supérieure ou égale à la première distance.

14. Procédé permettant le fonctionnement d'un dispositif électronique selon la revendication 11, comprenant :
le fait d'amener le capteur de distance comprenant une pluralité de cellules destinées à mesurer une pluralité d'éléments de données de distance ;
la distinction d'une pluralité de zones, sur la base de la pluralité d'éléments de données de distance, dans le champ de vision du capteur de distance ; et
la prise de photographie du sujet, sur la base d'une région d'intérêt, ROI, correspondant à au moins certaines de la pluralité de zones.

15. Procédé permettant le fonctionnement d'un dispositif électronique selon la revendication 14, comprenant la prise de photographie du sujet, sur la base d'une région d'intérêt, ROI, du capteur de distance, qui est une zone incluse dans une plage spécifiée à partir du centre du champ de vision de la première caméra parmi les zones où le champ de vision du capteur de distance et le champ de vision de la première caméra déterminée se chevauchent à la distance du sujet, parmi la pluralité de zones.
